# EUROPÄISCHE PATENTSCHRIFT

(11) **EP 4 185 502 B1**
(45) Veröffentlichungstag und Bekanntmachung des Hinweises auf die Patenterteilung: **30.04.2025**
(21) Anmeldenummer: 20746940.4
(22) Anmeldetag: 24.07.2020
(51) Int. Cl.: B60V 1/02, B60V 1/10, B64C 39/06, B64C 39/02

(54) **TRIEBWERK FÜR EINEN FLUGKÖRPER, VERFAHREN ZUM BETREIBEN EINES TRIEBWERKS FÜR EINEN FLUGKÖRPER SOWIE FLUGKÖRPER MIT WENIGSTENS EINEM TRIEBWERK**
ENGINE FOR AN AIRCRAFT, METHOD FOR OPERATING AN ENGINE FOR AN AIRCRAFT, AND AIRCRAFT HAVING AT LEAST ONE ENGINE
MOTEUR POUR UN AÉRONEF, PROCÉDÉ DE FONCTIONNEMENT D'UN MOTEUR POUR UN AÉRONEF, ET AÉRONEF COMPORTANT AU MOINS UN MOTEUR

(43) Veröffentlichungstag der Anmeldung: 31.05.2023
(73) Patentinhaber: KMTC Vortifer Technologies GmbH, 70736 Fellbach (DE)
(72) Erfinder: OBERMOSER, Karl, 92364 Deining (DE)
(74) Vertreter: Dietz, Christopher Friedrich
(86) Internationale Anmeldenummer: PCT/EP2020/071020
(87) Internationale Veröffentlichungsnummer: WO 2022/017629

(56) Entgegenhaltungen:
- US-A- 3 203 498
- US-A- 3 215 218
- US-A- 3 397 853
- US-A- 5 203 521
- US-A1- 2005 205 715

## Beschreibung

Die Erfindung betrifft ein Triebwerk für einen Flugkörper nach Anspruch 1. Die Erfindung betrifft weiterhin ein Verfahren zum Betreiben eines Triebwerks für einen Flugkörper nach Anspruch 13 sowie einen

Flugkörper mit wenigstens einem Triebwerk nach Anspruch 14.

Aus dem Stand der Technik ist beispielsweise die Druckschrift DE 20 2018 104 722 U1 bekannt. Diese beschreibt ein Fluggerät mit einer Rahmenstruktur und mehreren an der Rahmenstruktur angeordneten Hubrotoren, mittels derer ein vertikal nach oben gerichteter Primärauftrieb sowie Vortriebskräfte erzeugbar sind. Dabei ist vorgesehen, dass darüber hinaus eine Strahlturbine vorgesehen ist, deren Schubstrahl so ausrichtbar ist, dass ein im Wesentlichen parallel zum Primärauftrieb gerichteter Sekundärauftrieb erzeugbar ist, der dem Primärauftrieb überlagerbar ist. Weiterhin zeigt die Druckschrift US 5,203,521 ein Flugzeug mit einem ringförmigen Körper, der einen zentralen Durchgang definiert, mit einem oberen Deflektor, mit einem unteren Kollektor und mit einem Fluidantrieb im Durchgang. Luft wird mittels eines Antriebs beschleunigt und um den Ringkörper zirkuliert. Der Kollektor teilt die zirkulierende Luft auf und leitet einen Teil der Luft in den Durchgang und einen Teil der Luft unter das Flugzeug, um Schub bereitzustellen. Weitere Flugzeuge sind aus den Druckschriften US 3,747,726 und US 2,997,254 bekannt. Die Druckschrift US 3,215,218 zeigt zudem eine Kraftfahrzeugeinrichtung zur Traktionserhöhung.

Die Druckschrift US 3 397 853 definiert einen ringförmigen Rumpf, der durch einen hohlen, ringförmigen Rahmen definiert ist, dessen oberer, geneigter äußerer Oberflächenteil in der Lage ist, eine kontrollierte Menge eines laminierten Flüssigkeitsfilms aufzunehmen, um die Fahrzeugbewegung in einer vorbestimmten Weise zu führen.

Es ist Aufgabe der Erfindung, ein Triebwerk vorzuschlagen, welches gegenüber bekannten Triebwerken Vorteile aufweist, insbesondere hinsichtlich des von ihm bereitgestellten Schubs in weitem Rahmen skalierbar ist und zudem einen besonders effizienten Betrieb ermöglicht.

Dies wird erfindungsgemäß mit einem Triebwerk für einen Flugkörper mit den Merkmalen des Anspruchs 1 erreicht. Dabei ist vorgesehen, dass das Wirbelführungselement als Rotationskörper vorliegt, der durch Rotation einer zumindest auf ihrer radial außen liegenden Seite einen stetigen Verlauf aufweisenden geschlossenen Kurve um eine Rotationsachse gebildet ist, und dass die Lufteinlassöffnung unmittelbar in eine Außenumgebung des Triebwerks einmündet, sodass bei bestimmungsgemäßem Betrieb des Triebwerks Luft von der dem Luftumlenkelement abgewandten Seite des Triebwerks durch die Lufteinlassöffnung in den Ansaugkanal gefördert wird.

Das Triebwerk ist zum Antreiben des Flugkörpers vorgesehen und ausgebildet. Es kann daher auch als Luftfahrtantrieb bezeichnet werden. Selbstverständlich kann das Triebwerk auch separat von dem Flugkörper vorliegen. Der von dem Triebwerk angetriebene beziehungsweise antreibbare Flugkörper kann grundsätzlich beliebig ausgestaltet sein, beispielsweise liegt er als unbenanntes Fluggerät, beispielsweise als Drohne, oder - bevorzugt - als Luftfahrzeug vor. Unter dem Luftfahrzeug ist ein Fahrzeug zu verstehen, das innerhalb der Erdatmosphäre fliegt. Es stellt ein mobiles Verkehrsmittel dar, dass dem Transport von Personen, Gütern oder dergleichen dient. Das Luftfahrzeug ist also für den Personenverkehr und/oder den Güterverkehr vorgesehen und ausgebildet.

Das Luftfahrzeug ist vorzugsweise schwerer als Luft und verfügt über eine Antriebseinrichtung beziehungsweise einen Kraftantrieb, sodass der Flugkörper insgesamt als Flugzeug bezeichnet werden kann. Ein Flugzeug ist ganz allgemein ausgedrückt ein Luftfahrzeug, das schwerer als Luft ist und den zu seinem Fliegen nötigen dynamischen Auftrieb mit nicht-rotierenden Auftriebsflächen erzeugt. Das Luftfahrzeug, insbesondere das Triebwerk, kann auch insgesamt leichter als Luft sein. Hierzu weist das Luftfahrzeug beziehungsweise das Triebwerk beispielsweise Auftrieb erzeugende Mittel auf.

Der Flugkörper kann selbstverständlich auch eine andere Ausgestaltung aufweisen, beispielsweise liegt er in Form eines flugfähigen Kraftfahrzeugs vor. Ein solches Kraftfahrzeug ist beispielsweise dazu vorgesehen und ausgestaltet, zumindest zeitweise am Boden beziehungsweise mit Bodenkontakt bewegt zu werden, insbesondere auf Rädern des Kraftfahrzeugs, und zeitweise beabstandet von dem Boden zu fliegen, nämlich angetrieben mittels des Triebwerks. Das Triebwerk wird also zumindest während des Flugbetriebs des Kraftfahrzeugs zu dessen Antreiben verwendet. Es kann jedoch auch zur Erzeugung von Vortrieb verwendet werden, während das Kraftfahrzeug sich über seine Räder an dem Boden abstützt.

Das Triebwerk verfügt als wesentliche Elemente über das Wirbelführungselement und das Luftumlenkelement. Das Wirbelführungselement und das Luftumlenkelement wirken zusammen, um Schub zu erzeugen, welcher dem Antreiben des Flugkörpers dient und in eine bestimmte Richtung gerichtet ist. Vorzugsweise ist der Schub des Triebwerks zumindest zeitweise derart ausgerichtet, dass er einen Auftrieb des Flugkörpers bewirkt. Hierzu ist der Schub üblicherweise geodätisch gesehen nach unten gerichtet, also ausgehend von dem Flugkörper in Richtung eines Untergrunds beziehungsweise Bodens. Als besonders wesentlich soll bereits an dieser Stelle hervorgehoben werden, dass das Triebwerk Luft aus der Umgebung von derselben Seite des Triebwerks fördert beziehungsweise ansaugt, auf welcher nachfolgend der Schub beziehungsweise ein von dem Triebwerk erzeugter Schubstrahl vorliegt. In anderen Worten wird die Luft bei bestimmungsgemäßem Betrieb des Triebwerks vorzugsweise von geodätisch unterhalb des Triebwerks beziehungsweise des Flugkörpers angesaugt.

Das Wirbelführungselement ist grundsätzlich ringförmig ausgestaltet und umgreift hierbei die Längsmittelachse des Triebwerks in Umfangsrichtung vollständig und durchgehend. Eine Längsmittelachse des Wirbelführungselements entspricht bevorzugt der Längsmittelachse des Triebwerks. Beispielsweise ist das Wirbelführungselement bezüglich einer Symmetrieachse rotationssymmetrisch. In diesem Fall fällt vorzugsweise die Symmetrieachse mit der Längsmittelachse des Triebwerks zusammen. Unter dem vorstehend erwähnten Schnitt ist insbesondere ein Längsschnitt bezüglich der Längsmittelachse des Wirbelführungselements oder bezüglich der Längsmittelachse des Triebwerks zu verstehen. Vorzugsweise liegt der von dem Triebwerk bereitgestellte Schub parallel zu der Längsmittelachse des Triebwerks und/oder der Längsmittelachse des Wirbelführungselements vor. In anderen Worten ist ein Schubvektor des Triebwerks parallel zu einer der genannten Längsmittelachsen. Dies gilt zumindest in wenigstens einer Stellung von Wirbelführungselement und Luftumlenkelement zueinander, falls diese gegeneinander verlagerbar sind.

Das Wirbelführungselement weist vorzugsweise im Schnitt beziehungsweise Halbschnitt gesehen einen stetigen Außenumfang auf. Das bedeutet, dass - wiederum im Schnitt, insbesondere im Längsschnitt bezüglich der Längsmittelachse des Wirbelführungselements - der Außenumfang des Wirbelführungselements keine Unstetigkeiten beziehungsweise Sprünge aufweist, sondern gleichmäßig verläuft. Beispielsweise ist das Wirbelführungselement im Halbschnitt gesehen oval, insbesondere kreisförmig oder elliptisch. Unter dem Halbschnitt ist ein Schnitt durch eine Schnittebene zu verstehen, bei welchem lediglich eine Seite einer senkrecht auf der Schnittebene stehenden weiteren Ebene betrachtet wird. Beispielsweise nehmen hierbei sowohl die Schnittebene als auch die weitere Ebene die Längsmittelachse des Wirbelführungselements auf. In anderen Worten wird bei dem Halbschnitt nur eine Hälfte des eigentlichen Schnitts herangezogen.

Es ist vorgesehen, dass das Wirbelführungselement als Rotationskörper vorliegt. Unter dem Rotationskörper ist ein Körper zu verstehen, der durch Rotation einer geschlossenen Kurve um eine Rotationsachse beziehungsweise Figurenachse gebildet ist. Die Rotationsachse entspricht der Längsmittelachse des Wirbelführungselements. Sie fällt vorzugsweise mit der Längsmittelachse des Triebwerks und/oder einer Längsmittelachse des Flugkörpers zusammen. In zumindest einer Stellung von Wirbelführungselement und Luftumlenkelement kann sie zudem mit der Längsmittelachse des Luftumlenkelements zusammenfallen. Die Kurve ist hierbei besonders bevorzugt durchgehend von der Rotationsachse beabstandet, um den Ansaugkanal zu bilden, der dann zentral bezüglich der Rotationsachse vorliegt. Die Kurve weist zumindest auf ihrer in radialer Richtung bezüglich der Rotationsachse außen liegenden Seite durchgehend einen stetigen Verlauf auf. Das bedeutet, dass auf einer in radialer Richtung liegenden Außenseite des Wirbelführungselements keine Kante, insbesondere keine Randkante, vorliegt, sondern dass vielmehr Unstetigkeiten vermieden werden. Hierdurch werden besonders geringe Strömungsverluste erzielt.

Beispielsweise erstreckt sich der stetige Verlauf der Kurve in radialer Richtung nach innen, insbesondere im Schnitt beziehungsweise Halbschnitt durch das Triebwerk gesehen, über wenigstens 10 %, wenigstens 15 %, wenigstens 20 % oder wenigstens 25 % der Erstreckung der Kurve in radialer Richtung, ausgehend von einer in radialer Richtung äußersten Stelle der Kurve. Die Kurve verläuft beidseitig der äußersten Stelle in radialer Richtung nach innen, sodass eine erste Profilfläche und eine zweite Profilfläche des Wirbelführungselements gebildet sind, die das Wirbelführungselement in axialer Richtung auf gegenüberliegenden Seiten begrenzen. Auf beiden Seiten der äußersten Stelle verläuft die Kurve stetig in radialer Richtung nach innen, nämlich jeweils über einen der genannten Anteile der Kurve. Besonders bevorzugt weist die Kurve zwei Bereiche auf, die auf gegenüberliegenden Seiten einer gedachten Ebene liegen, die parallel zu der Rotationsachse liegt und die Kurve schneidet.

Einer erster der Bereiche liegt in radialer Richtung außen und ein zweiter der Bereiche in radialer Richtung innen. Bezogen auf einen Abstand in radialer Richtung zwischen der in radialer Richtung äußersten Stelle und einem in radialer Richtung innersten Stelle der Kurve ist die Ebene beispielsweise mindestens 10 %, mindestens 20 %, mindestens 30 %, mindestens 40 % oder mindestens 50 % von der äußersten Stelle beabstandet. Besonders bevorzugt ist sie jedoch mindestens 60 %, mindestens 70 %, mindestens 80 % oder mindestens 90 % von ihr beabstandet. Besonders bevorzugt sind hierbei die Werte von mindestens 80 % und mehr. In dem ersten Bereich verläuft die Kurve durchgehend stetig. In dem zweiten Bereich kann sie ebenfalls stetig sein oder alternativ zumindest bereichsweise unstetig sein. Besonders bevorzugt grenzt der erste Bereich unmittelbar an wenigstens eine Unstetigkeit, insbesondere unmittelbar an mehrere Unstetigkeiten, der Kurve an, die in dem zweiten Bereich vorliegen. Es kann jedoch auch vorgesehen sein, dass die Kurve auf ihrer bezüglich der Rotationsachse radial innen liegenden Seite einen Bereich aufweist, in welchem sie unstetig ist. Abseits dieses Bereichs, der auch als Unstetigkeitsbereich bezeichnet werden kann, ist die Kurve durchgehend stetig. Beispielsweise weist die Kurve in dem Unstetigkeitsbereich einen geraden Abschnitt auf, von welchem Kurve an wenigstens einer Seite unter Ausbildung einer Unstetigkeitsstelle ausgeht. Der gerade Abschnitt erstreckt sich zum Beispiel zwischen der Lufteinlassöffnung und der Luftauslassöffnung und begrenzt insoweit den Ansaugkanal in radialer Richtung nach außen. Vorzugsweise erstreckt sich der gerade Abschnitt von der Lufteinlassöffnung bis hin zu der Luftauslassöffnung.

Beispielsweise ist es vorgesehen, dass das Wirbelführungselement im Halbschnitt in axialer Richtung gesehen Abmessungen aufweist, die mindestens 25 % oder mindestens 50 % seiner Abmessungen in radialer Richtung entsprechen. Alternativ können die Abmessungen in axialer Richtung auch größer sein und mindestens 75 % oder mindestens 100 % der Abmessungen in radialer Richtung entsprechen. Die Abmessungen einer von der vorstehend erläuterten Kurve eingeschlossenen Fläche in axialer Richtung entsprechen also mindestens einem der genannten Anteile an ihren Abmessungen in radialer Richtung.

Das Wirbelführungselement ist von dem Ansaugkanal durchgriffen, welcher vorzugsweise zentral in dem Wirbelführungselement angeordnet ist, also koaxial des Wirbelführungselements vorliegt. Der Ansaugkanal ist besonders bevorzugt durchgehend gerade. Der Ansaugkanal erstreckt sich von der Lufteinlassöffnung bis hin zu der Luftauslassöffnung. In dem Ansaugkanal ist die Luftfördereinrichtung angeordnet, welche dem Fördern der Luft durch den Ansaugkanal aus Richtung der Lufteinlassöffnung in Richtung der Luftauslassöffnung dient. Die Luftfördereinrichtung ist beispielsweise mithilfe einer Antriebseinrichtung antreibbar. Die Antriebseinrichtung liegt beispielsweise in Form eines Elektromotors, einer Turbine oder einer Brennkraftmaschine vor oder weist eine solche zumindest auf. Die Luftfördereinrichtung ist beispielsweise ein Propeller, der aufgrund seiner Anordnung in dem Ansaugkanal auch als Impeller bezeichnet werden kann, da er von dem Wirbelführungselement umgriffen ist. Auch andere Ausgestaltungen der Luftfördereinrichtung sind grundsätzlich realisierbar, solange sie zur Förderung der Luft durch den Ansaugkanal dienen können.

Unter der Lufteinlassöffnung ist vorzugsweise eine in Umfangsrichtung bezüglich der Längsmittelachse des Wirbelführungselements durchgehend von dem Wirbelführungselement begrenzte Öffnung zu verstehen, welche durchgehend in einer gedachten Ebene liegt. Die gedachte Ebene schneidet in Umfangsrichtung durchgehend das Wirbelführungselement oder liegt zumindest tangential an diesem an. Besonders bevorzugt liegt die gedachte Ebene in Umfangsrichtung durchgehend tangential an dem Wirbelführungselement an. Die gedachte Ebene steht beispielsweise senkrecht auf der Längsmittelachse des Wirbelführungselements. Für die Luftauslassöffnung gilt analog das gleiche. Auch die Luftauslössöffnung ist also in Umfangsrichtung durchgehend von dem Wirbelführungselement begrenzt. Bevorzugt liegt auch sie durchgehend in einer (weiteren) gedachten Ebene, die in Umfangsrichtung durchgehend das Wirbelführungselement schneidet oder tangential an diesem anliegt, besonders bevorzugt in Umfangsrichtung durchgehend tangential an dem Wirbelführungselement anliegt. Auch diese gedachte Ebene kann senkrecht auf der Längsmittelachse des Wirbelführungselements stehen.

Zusätzlich zu dem Wirbelführungselement verfügt das Triebwerk über das Luftumlenkelement. Das Luftumlenkelement ist bei bestimmungsgemäßem Betrieb des Triebwerks beziehungsweise des Flugkörpers geodätisch oberhalb des Wirbelführungselements angeordnet, zumindest teilweise, insbesondere größtenteils oder vollständig. Anders ausgedrückt ist eine dem Luftumlenkelement zugewandte Seite des Wirbelführungselements geodätisch oberhalb einer dem Luftumlenkelement abgewandten Seite des Wirbelführungselements angeordnet. Geodätisch gesehen liegt also das Wirbelführungselements bei dem bestimmungsgemäßen Betrieb zwischen dem Luftumlenkelement und dem Boden vor. Auch eine andere geodätische Ausrichtung von Luftumlenkelement und Wirbelführungselement kann grundsätzlich vorgesehen sein. Es ist jedoch wesentlich, dass die Luft durch die Lufteinlassöffnung in eine andere Richtung eingesaugt wird als sie durch den Luftaustrittsspalt ausgebracht wird.

Insbesondere unterscheiden sich die axialen Geschwindigkeitskomponenten eines jeweiligen Geschwindigkeitsvektors - bei gleichem Bezugssystem - hinsichtlich ihres Vorzeichens voneinander. Ist also die axiale Geschwindigkeitskomponente eines der Geschwindigkeitsvektoren kleiner als Null, so beträgt die axiale Geschwindigkeitskomponente eines anderen der Geschwindigkeitsvektoren mindestens gleich Null, ist insbesondere genau gleich Null oder größer als Null, beziehungsweise umgekehrt. Es ist grundsätzlich vorgesehen, die Luft durch die Lufteinlassöffnung unmittelbar aus der Außenumgebung anzusaugen und durch den Luftaustrittsspalt unmittelbar in die Außenumgebung auszubringen. Die Luft strömt also durch die Lufteinlassöffnung in das Triebwerk, insbesondere in den Flugkörper, ein und durch den Luftaustrittsspalt aus dem Triebwerk, insbesondere aus dem Flugkörper, aus.

Bevorzugt ist es vorgesehen, dass die Lufteinlassöffnung und der Luftaustrittsspalt derart ausgerichtet sind, dass bei bestimmungsgemäßem Betrieb des Triebwerks die Luft in einer Richtung durch die Lufteinlassöffnung einströmt, die in axialer Richtung einer Richtung entgegengerichtet ist oder senkrecht auf dieser steht, durch die Luft aus dem Luftaustrittsspalt austritt. Die Luft aus der Außenumgebung tritt in einer ersten Richtung beziehungsweise mit einem ersten Geschwindigkeitsvektor durch die Lufteinlassöffnung in den Ansaugkanal ein. Aus dem Luftaustrittsspalt tritt sie hingegen in einer zweiten Richtung beziehungsweise mit einem zweiten Geschwindigkeitsvektor aus dem Radialkanal aus. Die erste Richtung und die zweite Richtung stehen beispielsweise senkrecht aufeinander oder sind einander in axialer Richtung bezüglich der Längsmittelachse des Triebwerks entgegengerichtet. Beispielsweise kann es also vorgesehen sein, dass der erste Geschwindigkeitsvektor lediglich eine axiale Geschwindigkeitskomponente und der zweite Geschwindigkeitsvektor lediglich eine radiale Geschwindigkeitskomponente aufweist, wohingegen die jeweils anderen Geschwindigkeitskomponenten gleich Null sind. Sofern sowohl der erste Geschwindigkeitsvektor als auch der zweite Geschwindigkeitsvektor jeweils eine axiale Geschwindigkeitskomponente aufweisen, sind diese einander entgegengerichtet. Bei gleichem Bezugssystem ist also eine der Geschwindigkeitskomponenten positiv und die jeweils andere negativ.

Das Luftumlenkelement übergreift das Wirbelführungselement zumindest bereichsweise. Hierbei ist es auf der die Luftauslassöffnung aufweisenden Seite des Wirbelführungselements angeordnet. Bevorzugt ist eine Längsmittelachse des Luftumlenkelements zumindest zeitweise parallel zu der Längsmittelachse des Wirbelführungselements und/oder der Längsmittelachse des Triebwerks angeordnet. Bevorzugt entspricht die Längsmittelachse des Luftumlenkelements einer der genannten Längsmittelachsen, insbesondere in wenigstens einer Stellung von Wirbelführungselement und Luftumlenkelement zueinander. In anderen Worten ist das Luftumlenkelement vorteilhafterweise koaxial zu dem Wirbelführungselement angeordnet.

Das Luftumlenkelement erstreckt sich in radialer Richtung nach außen, insbesondere ausgehend von seiner Längsmittelachse und/oder der Längsmittelachse des Triebwerks, wobei es die Luftauslassöffnung in radialer Richtung vollständig übergreift. Das Luftumlenkelement weist in radialer Richtung größere Abmessungen auf als die Luftauslassöffnung, sodass im Schnitt gesehen das Luftumlenkelement in radialer Richtung weiter nach außen ragt als die Luftauslassöffnung. Das Luftumlenkelement begrenzt abseits der Luftauslassöffnung, nämlich in radialer Richtung außen von der Luftauslassöffnung, den Luftaustrittspalt gemeinsam mit dem Wirbelführungselement. Der Luftaustrittspalt ist über einen ebenfalls von dem Wirbelführungselement und dem Luftumlenkelement gemeinsam begrenzten Radialkanal strömungstechnisch an die Luftauslassöffnung angeschlossen. Der Radialkanal erstreckt sich somit strömungstechnisch ausgehend von der Luftauslassöffnung bis hin zu dem Luftaustrittsspalt.

Während eines Betriebs des Triebwerks wird die durch die Luftauslassöffnung aus dem Ansaugkanal austretende Luft von dem Luftumlenkelement in radialer Richtung nach außen umgelenkt, sodass es in Richtung des Luftaustrittsspalts strömt und nachfolgend aus diesem in die Außenumgebung des Triebwerks eintritt. Der Luftaustrittsspalt liegt beispielsweise auf derselben Seite einer gedachten Ebene vor wie die Lufteinlassöffnung, wohingegen die Luftauslassöffnung auf einer dieser Seite entgegengesetzten Seite der gedachten Ebene angeordnet ist. Die gedachte Ebene steht beispielsweise senkrecht auf der Längsmittelachse des Wirbelführungselements.

Die aus dem Luftaustrittsspalt austretende Luft strömt entlang des Wirbelelements weiter und trägt nachfolgend zur Erzeugung des Schubs des Triebwerks bei. Beispielsweise ist während eines bestimmungsgemäßen Betriebs des Triebwerks das Luftumlenkelement geodätisch oberhalb des Wirbelführungselements angeordnet. In anderen Worten soll das Wirbelführungselement zwischen dem Luftumlenkelement und dem Boden vorliegen. Das bedeutet wiederum, dass das Triebwerk Luft von geodätisch unterhalb des Triebwerks beziehungsweise des Flugkörpers ansaugt, also schlussendlich - geodätisch gesehen - Luft aus der Außenumgebung von der Unterseite des Triebwerks beziehungsweise des Flugkörpers ansaugt und zunächst in Richtung der Oberseite des Triebwerks fördert. Nachfolgend gelangt die Luft zumindest teilweise wieder auf die Unterseite, um dort den Schub zu erzeugen.

Die Lufteinlassöffnung ist auf der dem Luftumlenkelement abgewandten Seite des Wirbelführungselements angeordnet. Um eine effektive Bereitstellung des Schubs zu gewährleistet, mündet sie unmittelbar in die Außenumgebung des Triebwerks ein. Das bedeutet, dass zwischen der Lufteinlassöffnung und der Außenumgebung kein weiteres Element des Triebwerks und/oder des Flugkörpers angeordnet ist. Vielmehr ist eine gedachte Verlängerung des Ansaugkanals auf Seiten der Lufteinlassöffnung bis in die Außenumgebung versperrungsfrei ausgebildet. In der gedachten Verlängerung ist also kein weiteres Element des Triebwerks und/oder des Flugkörpers angeordnet. Hierdurch wird bei bestimmungsgemäßem Betrieb des Triebwerks Luft von der dem Luftumlenkelement abgewandten Seite des Triebwerks durch die Lufteinlassöffnung in den Ansaugkanal gefördert.

Das bedeutet, dass während des bestimmungsgemäßen Betriebs des Triebwerks Luft aus der Außenumgebung in die dem Schubvektor des Triebwerks entgegengerichtete Richtung angesaugt wird. Während das Triebwerk also den Schub mit dem Schubvektor bereitstellt, saugt es die zur Bereitstellung des Schubs verwendete Luft in der entgegengesetzten Richtung an, nämlich unmittelbar aus der Außenumgebung. Vorstehend wurde bereits darauf hingewiesen, dass die Lufteinlassöffnung unmittelbar in die Außenumgebung des Triebwerks einmündet, sodass auch das Ansaugen der Luft unmittelbar aus der Außenumgebung erfolgt. Anders ausgedrückt ist die Lufteinlassöffnung überdeckungsfrei ausgestaltet, sodass ein unterhalb der Lufteinlassöffnung angeordneter freier Luftraum in der Außenumgebung des Triebwerks vorliegt. Unter dem freien Luftraum ist ein Luftraum zu verstehen, welcher vollständig mit Luft gefüllt ist und in dem entsprechend kein weiteres Element des Triebwerks und/oder des Flugkörpers vorliegt.

Der freie Luftraum erstreckt sich unterhalb der Lufteinlassöffnung, insbesondere geht er unmittelbar von der Lufteinlassöffnung aus. Der freie Luftraum liegt als gedachte Verlängerung des Ansaugkanals vor, nämlich ausgehend von der Lufteinlassöffnung. Hierbei ist es beispielsweise vorgesehen, dass der Luftraum eine Erstreckung in axialer Richtung bezüglich der Längsmittelachse des Triebwerks aufweist, die mindestens eine Erstreckung des Wirbelführungselements und/oder einer Erstreckung des Luftumlenkelements in derselben Richtung entspricht. Der Luftraum weist somit bestimmte Abmessungen auf, nämlich zumindest in axialer Richtung. Das bedeutet, dass ausgehend von der Lufteinlassöffnung über zumindest die genannte Erstreckung kein weiteres Element des Triebwerks und/oder des Flugkörpers auf der die Lufteinlassöffnung aufweisenden Seite des Wirbelführungselements vorliegt.

Vorzugsweise ist die Erstreckung des Luftraums um einen Faktor von mindestens 2, mindestens 3, mindestens 4 oder mindestens 5 größer als die Erstreckung des Wirbelführungselements, als die Erstreckung des Luftumlenkelements oder einer gemeinsamen Erstreckung des Wirbelführungselements und des Luftumlenkelements in derselben Richtung. Diese Betrachtungen gelten selbstverständlich lediglich während eines Flugbetriebs des Triebwerks beziehungsweise des Flugkörpers. Befindet sich der Flugkörper in Bodennähe, so kann der freie Luftraum von dem Boden begrenzt sein. In diesem Fall liegt jedoch ebenfalls kein weiteres Element des Triebwerks und/oder des Flugkörpers zwischen der Lufteinlassöffnung und dem Boden vor.

Zusätzlich oder alternativ kann vorgesehen sein, dass ein in axialer Richtung bezüglich der Längsmittelachse des Triebwerks einerseits von der Lufteinlassöffnung und andererseits von der Luftfördereinrichtung und in radialer Richtung nach außen von dem Wirbelführungselement begrenzter Luftraum vollständig mit Luft gefüllt ist. Auch dieser Luftraum, welcher Teil des Ansaugkanals ist und insoweit von dem Wirbelführungselement begrenzt wird, ist als freier Luftraum ausgestaltet. In ihm ist also kein weiteres Element des Triebwerks und/oder des Flugkörpers angeordnet, sodass er vollständig luftgefüllt ist. Der Luftraum erstreckt sich in axialer Richtung von der Lufteinlassöffnung bis hin zu der Luftfördereinrichtung. In radialer Richtung nach außen wird er von dem Wirbelführungselement begrenzt.

Diese Ausführungen machen deutlich, dass eine möglichst ungehinderte Umströmung des Wirbelführungselements realisiert ist, sodass Luft aus der Außenumgebung ungehindert durch die Lufteinlassöffnung in den Ansaugkanal eintreten kann. Hierdurch wird ein effizienter Betrieb des Triebwerks erzielt. Das Triebwerk und insbesondere das Wirbelführungselement liegen hierbei vorzugsweise als Außenteil des Flugkörpers vor. Sie bilden somit als ein äußerstes Element des Flugkörpers und liegen entsprechend auf seiner Außenseite vor. Anders ausgedrückt werden das Triebwerk und insbesondere auch der Flugkörper von dem Wirbelführungselement in Richtung der Außenumgebung begrenzt, sodass sich die Außenumgebung des Flugkörpers unmittelbar bis hin zu dem Wirbelführungselement erstreckt.

Während eines Betriebs des Triebwerks wird Luft aus der Außenumgebung durch die Lufteinlassöffnung in den Ansaugkanal gefördert. Aus diesem tritt sie nachfolgend durch die Luftauslassöffnung in den Radialkanal aus und strömt durch diesen zu dem Luftaustrittsspalt. Der Luftaustrittspalt umgreift das Wirbelführungselement ringförmig, nämlich vorzugsweise in Umfangsrichtung bezüglich der Längsmittelachse des Wirbelführungselements und/oder der Längsmittelachse des Triebwerks vollständig und durchgehend. Die aus dem Luftaustrittsspalt austretende Luft strömt im Schnitt gesehen weiter entlang des Wirbelführungselements beziehungsweise einer Außenkontur des Wirbelführungselements, nämlich zumindest zum Teil aufgrund des Coandä-Effekts.

Es kann vorgesehen sein, dass die Luft im Schnitt gesehen entlang des Wirbelführungselements bis hin zu der Lufteinlassöffnung strömt, sodass zumindest ein Teil der Luft, welche aus dem Luftaustrittsspalt austritt, erneut durch die Lufteinlassöffnung in den Ansaugkanal gefördert wird. In jedem Fall wird das Triebwerk derart betrieben, dass sich eine Umströmung des Wirbelelements einstellt, sodass schlussendlich ein das Wirbelführungselement umgreifender Wirbel vorliegt, welcher bevorzugt rotationskörperförmig, insbesondere rotationstorusförmig, ist. Der mithilfe des Triebwerks erzeugte Wirbel, welcher auch als Tragwirbel bezeichnet werden kann, umgreift das Wirbelführungselement im Schnitt gesehen vollständig. Ebenso umgreift er das Wirbelführungselement in Umfangsrichtung, vorzugsweise durchgehend und ununterbrochen. In anderen Worten hüllt der Tragwirbel das Wirbelführungselement ein.

Der von dem Triebwerk erzeugte Schub wird durch unterschiedliche Wirkmechanismen erzielt. Zum einen liegt auf der dem Luftumlenkelement zugewandten Seite des Wirbelführungselements, also in dem Radialkanal, eine höhere Strömungsgeschwindigkeit vor als auf der dem Luftumlenkelement abgewandten Seite des Wirbelführungselements, also in der Außenumgebung. Aufgrund der unterschiedlichen Strömungsgeschwindigkeiten wird nach der Bernoulli-Gleichung ein Unterdruck auf der dem Luftumlenkelement zugewandten Seite des Wirbelführungselements im Vergleich zu der dem Luftumlenkelement abgewandten Seite des Wirbelführungselements bewirkt. Da nämlich die Strömungsgeschwindigkeit der Luft auf der dem Luftumlenkelement zugewandten Seite größer ist als die Strömungsgeschwindigkeit der Luft auf der dem Luftumlenkelement abgewandten Seite, ist der auf der dem Luftumlenkelement zugewandten Seite vorliegende Druck kleiner als der auf der dem Luftumlenkelement zugewandten Seite. Die Druckdifferenz zwischen den Drücken auf den gegenüberliegenden Seiten des Wirbelführungselements bewirkt einen Teil des von dem Triebwerk erzeugten Schubs.

Ein weiterer Teil des Schubs wird durch den Tragwirbel indirekt bereitgestellt, sobald dieser vorliegt. Der Tragwirbel fördert Luft aus der Außenumgebung von der dem Wirbelführungselement abgewandten Seite des Luftumlenkelements hin auf die dem Luftumlenkelement abgewandten Seite des Wirbelführungselements. Beispielsweise wird ein Teil der Luft dem Tragwirbel zugeschlagen und auf die dem Luftumlenkelement abgewandte Seite des Wirbelführungselements gedrängt, also insbesondere auf die dem Boden zugewandte Seite des Triebwerks. Hierdurch wird Schub bereitgestellt, der nicht unmittelbar durch die Strömung des Tragwirbels selbst bewirkt wird, sondern durch die von dem Tragwirbel zusätzlich geförderte Luft aus der Außenumgebung. Ganz grundsätzlich kann hierzu festgehalten werden, dass das Triebwerk den Schub auf derjenigen Seite bereitstellt, von welcher es auch die Luft aus der Außenumgebung ansaugt. Ein von dem Triebwerk bewirkter Schubstrahl liegt entsprechend auf der dem Luftumlenkelement abgewandten Seite des Wirbelführungselements vor. Auf dieser Seite ist auch die Lufteinlassöffnung angeordnet, durch welche das Triebwerk die Luft aus der Außenumgebung ansaugt.

Es ist einsichtig, dass der Tragwirbel erst dann ausgebildet werden kann, wenn ein hinreichender Abstand des Triebwerks von dem Boden vorliegt. Um den von dem Tragwirbel erzeugten Auftrieb zu nutzen, ist es also zunächst notwendig, das Triebwerk beziehungsweise den Flugkörper von dem Boden zu beabstanden. Beispielsweise erfolgt dies mithilfe einer mechanischen Hebevorrichtung, welche den Flugkörper und damit das Triebwerk gegenüber dem Boden anhebt. Auch kann selbstverständlich der Flugkörper mit einem weiteren Triebwerk gestartet werden und erst anschließend das Triebwerk in Betrieb genommen werden.

Die Verwendung des Tragwirbels zum zumindest teilweisen Bereitstellen des Schubs des Triebwerks ermöglicht ein besonders energieeffizientes Betreiben des Triebwerks, weil das Erzeugen und Erhalten des Tragwirbels mit einem vergleichsweisen geringen Energieaufwand möglich ist, der deutlich geringer ist als der Energieaufwand, welcher zum unmittelbaren Erzeugen des Schubs notwendig wäre. Der Tragwirbel hat zudem eine besonders hohe Stabilität des Triebwerks und damit des Flugkörpers in der Luft zur Folge, weil der Tragwirbel ein großes Luftvolumen einnimmt beziehungsweise ein voluminöses Luftpolster für das Triebwerk beziehungsweise den Flugkörper schafft. Das Triebwerk und entsprechend der Flugkörper sind hinsichtlich der Tragfähigkeit nahezu beliebig skalierbar, weil auch der Tragwirbel grundsätzlich im Wesentlichen beliebig skalierbar ist, da er nach Art eines Potentialwirbels ausgebildet wird.

Eine Weiterbildung der Erfindung sieht vor, dass das Wirbelführungselement im Schnitt gesehen einerseits von einer ersten Profilfläche und andererseits von einer zweiten Profilfläche begrenzt ist, wobei die beiden Profilflächen beidseitig unmittelbar und stetig ineinander übergehen, insbesondere in einer senkrecht auf der Mittelachse stehenden gedachten Ebene. Die erste Profilfläche und die zweite Profilfläche liegen auf gegenüberliegenden Seiten einer gedachten Ebene vor, welche das Wirbelführungselement schneidet. Diese gedachte Ebene steht bevorzugt senkrecht auf der Längsmittelachse des Wirbelführungselements. Beispielsweise durchgreift die gedachte Ebene das Wirbelführungselement in axialer Richtung bezüglich der Längsmittelachse mittig, teilt das Wirbelführungselement also in zwei Teile auf, welche in axialer Richtung dieselbe Erstreckung aufweisen. Die beiden Teile des Wirbelführungselements können bezüglich der gedachten Ebene symmetrisch zueinander ausgestaltet sein. Die erste Profilfläche liegt auf der dem Luftumlenkelement abgewandten Seite des Wirbelführungselements und die zweite Profilfläche auf der dem Luftumlenkelement zugewandten Seite des Wirbelführungselements vor. Die beiden Profilflächen gehen auf jeder Seite stetig ineinander über, also ohne Unstetigkeit beziehungsweise ohne Sprung. Hierdurch wird eine Oberfläche des Wirbelführungselements geschaffen, die von der Luft besonders verlustarm überströmt wird, sodass sich eine hohe Effizienz ergibt.

Vorzugsweise ist es vorgesehen, dass im Schnitt gesehen ein Krümmungsradius der ersten Profilfläche und/oder ein Krümmungsradius der zweiten Profilfläche jeweils durchgehend vorzeichengleich ist/sind. Die erste Profilfläche wird im Schnitt von einer ersten Profillinie und die zweite Profilfläche von einer zweiten Profillinie definiert. Die Profilflächen beziehungsweise die Profillinien weisen jeweils einen Krümmungsradius auf, welcher sich über ihre Erstreckung ändern oder aber auch konstant bleiben kann. Zumindest ist es jedoch vorgesehen, dass einer der Krümmungsradien oder beide Krümmungsradien durchgehend vorzeichengleich sind, dass sich also das Vorzeichen des jeweiligen Krümmungsradius über die Erstreckung der jeweiligen Profilfläche nicht ändert, sondern gleichbleibt.

Beispielsweise ist also der Krümmungsradius der ersten Profilfläche im Schnitt gesehen über die gesamte Erstreckung der ersten Profilfläche mit demselben Vorzeichen gewählt. Analog hierzu kann zusätzlich oder alternativ der Krümmungsradius der zweiten Profilfläche im Schnitt gesehen über die gesamte Erstreckung der zweiten Profilfläche hinweg das gleiche Vorzeichen aufweisen. Bevorzugt weisen hierbei die erste Profilfläche und die zweite Profilfläche Krümmungsradien mit dem gleichen Vorzeichen auf. Besonders bevorzugt sind zudem die Krümmungsradien der ersten Profilfläche und der zweiten Profilfläche identisch, sodass das Wirbelführungselement im Schnitt gesehen, insbesondere im Halbschnitt gesehen, kreisförmig ist. Hierdurch wird eine besonders strömungsgünstige Ausgestaltung des Wirbelführungselements realisiert.

Eine Weiterbildung der Erfindung sieht vor, dass das Wirbelführungselement als Rotationskörper, insbesondere als Rotationstorus, ausgebildet ist. Der Rotationskörper ist ein Körper, der durch Rotation einer geschlossenen Kurve um eine Rotationsachse gebildet ist. Beispielsweise ist die Kurve zumindest bereichsweise gekrümmt, insbesondere durchgehend gekrümmt. Vorzugsweise weist ein Krümmungsradius der Kurve über die gesamte Kurve hinweg das gleiche Vorzeichen auf. Es kann also vorgesehen sein, dass der Krümmungsradius durchgehend mindestens Null oder durchgehend höchstens Null beträgt oder - falls die Kurve durchgehend gekrümmt ist - durchgehend größer als Null oder durchgehend kleiner als Null ist. Unter dem Rotationstorus ist wiederum ein Rotationskörper zu verstehen, der durch Rotation eines Kreises um eine in der Kreisebene liegende und den Kreis nicht schneidende Rotationsachse erzeugt wird. Die Rotationsachse des Rotationskörpers ist hierbei insbesondere die Längsmittelachse des Wirbelführungselements. Der Rotationskörper ist in Umfangsrichtung bezüglich seiner Rotationsachse durchgehend und ununterbrochen ausgestaltet. Dies ermöglicht eine besonders effektive Führung des Tragwirbels bei gleichzeitig äußerst geringen strömungstechnischen Verlusten.

Eine Weiterbildung der Erfindung sieht vor, dass der Luftaustrittsspalt mit der Luftauslassöffnung über einen Radialkanal in Strömungsverbindung steht, der einen sich in Richtung des Luftaustrittsspalts verkleinernden Durchströmungsquerschnitt aufweist, sodass er nach Art einer Düse ausgestaltet ist. Der Radialkanal ist vorzugsweise in Umfangsrichtung bezüglich der Längsmittelachse des Triebwerks durchgehend und - abgesehen von einer oder mehreren Tragstreben, die optional vorliegen - unterbrechungsfrei. In radialer Richtung erstreckt er sich ausgehend von der Luftauslassöffnung bis hin zu dem Luftaustrittsspalt, sodass die aus dem Ansaugkanal durch die Luftauslassöffnung austretende Luft durch den Radialkanal hin zu dem Luftaustrittsspalt strömt. Der Durchströmungsquerschnitt des Radialkanals verkleinert sich in Richtung des Luftaustrittsspalts. Die Gestalt des Radialkanals wird insbesondere derart gewählt, dass die Luft in dem Luftaustrittsspalt eine gewünschte Strömungsgeschwindigkeit aufweist. Diese Strömungsgeschwindigkeit liegt bevorzugt im Unterschallbereich, sodass keine negativen mechanischen Einflüsse auf das Triebwerk durch strömungstechnische Stöße oder dergleichen zu erwarten sind. Die Ausgestaltung des Radialkanals nach Art einer Düse ermöglicht einen effektiven Betrieb des Triebwerks.

Eine Weiterbildung der Erfindung sieht vor, dass das Luftumlenkelement das Wirbelführungselement derart übergreift, dass die Luft in dem Radialkanal zumindest teilweise ausgehend von der Luftauslassöffnung bis hin zu der Lufteinlassöffnung strömungstechnisch ablösungsfrei an dem Wirbelführungselement anliegt. Es wurde bereits darauf hingewiesen, dass das Triebwerk derart betrieben wird, dass der Tragwirbel das Wirbelführungselement umgreift. Um eine besonders verlustarme Umströmung des Wirbelführungselements zu erzielen, soll ein Ablösen der Strömung beziehungsweise des Tragwirbels von dem Wirbelführungselement soweit wie möglich vermieden werden, insbesondere vollständig. Hierzu umgreift das Luftumlenkelement das Wirbelführungselement. Das Ausmaß des Übergreifens ist dabei derart gewählt, dass die ablösungsfreie Umströmung des Wirbelführungselements durch die aus der Luftauslassöffnung austretende Luft erzielt wird. Zumindest ein Teil der aus der Luftauslassöffnung und nachfolgend aus dem Luftaustrittsspalt austretenden Luft soll hierbei derart an dem Wirbelführungselement anliegen, dass er erneut bis hin zu der Lufteinlassöffnung strömt und durch diese erneut in den Ansaugkanal gefördert wird. Dies ermöglicht die bereits erläuterte hohe Effizienz des Triebwerks, die durch das verlustarme Erzeugen des Tragwirbels realisiert ist.

Eine Weiterbildung der Erfindung sieht vor, dass das Luftumlenkelement das Wirbelführungselement in radialer Richtung vollständig übergreift, insbesondere derart, dass der Luftaustrittsspalt eine Flächennormale aufweist, die parallel zu der Längsmittelachse des Triebwerks verläuft, oder dass die Flächennormale die Längsmittelachse des Wirbelführungselements unterhalb des Wirbelführungselements schneidet. In radialer Richtung nach außen ragt das Luftumlenkelement also über das Wirbelführungselement hinaus. Der von dem Luftumlenkelement und dem Wirbelführungselement definierte Luftaustrittsspalt wird in Umfangsrichtung durchgehend mittig von einer gedachten Ebene geschnitten oder liegt vollständig in dieser gedachten Ebene. Die gedachte Ebene steht senkrecht auf der Längsmittelachse des Wirbelführungselements und/oder der Längsmittelachse des Luftumlenkelements.

Der Luftaustrittsspalt weist eine Flächennormale auf, die beispielsweise parallel zu der Längsmittelachse des Triebwerks verläuft. In diesem Fall liegt der Luftaustrittsspalt vollständig in der gedachten Ebene. Es kann jedoch auch vorgesehen sein, dass die Flächennormale die Längsmittelachse des Wirbelführungselements unterhalb des Wirbelführungselements schneidet. In diesem Fall schneidet die gedachte Ebene den Luftaustrittsspalt unter einem bestimmten Winkel. Ein derart weitgehendes Übergreifen verhindert zuverlässig das Ablösen der Luft von dem Wirbelführungselement auch außerhalb des Radialkanals, sodass zumindest ein Teil der durch den Luftaustrittsspalt austretenden Luft bis hin zu der Lufteinlassöffnung strömt und erneut durch diese in den Ansaugkanal gefördert wird.

Eine Weiterbildung der Erfindung sieht vor, dass das Luftumlenkelement einen in den Ansaugkanal eingreifenden Vorsprung aufweist, an welchem eine Antriebseinrichtung zum Antreiben der Luftfördereinrichtung befestigt ist. Der Vorsprung erstreckt sich ausgehend von einem Grundelement des Luftumlenkelements in den Ansaugkanal hinein. Beispielsweise liegt das Grundelement außerhalb des Ansaugkanals vor, sodass lediglich der Vorsprung in den Ansaugkanal hineinragt. Der Vorsprung ist vorzugsweise rotationssymmetrisch bezüglich der Längsmittelachse des Luftumlenkelements ausgebildet. Zusätzlich oder alternativ entspricht eine Längsmittelachse des Vorsprungs der Längsmittelachse des Wirbelführungselements. Hierdurch wird ein durch den Vorsprung bewirkter Strömungswiderstand soweit wie möglich reduziert. An dem Vorsprung ist die Antriebseinrichtung befestigt, welche zum Antreiben der Luftfördereinrichtung dient.

Beispielsweise ist die Luftfördereinrichtung, also beispielsweise ein Propeller, ein Verdichterlaufrad oder dergleichen, an dem Vorsprung drehbar gelagert. Hierdurch wird eine besonders kompakte Ausgestaltung des Triebwerks erzielt.

Eine Weiterbildung der Erfindung sieht vor, dass eine den Radialkanal begrenzende, dem Wirbelführungselement zugewandte Luftumlenkfläche des Luftumlenkelements im Schnitt gesehen durchgehend gekrümmt ist, insbesondere durchgehend einen Krümmungsradius aufweist, der in einem bestimmten Krümmungsradiusbereich liegt. Die Luftumlenkfläche erstreckt sich in radialer Richtung gesehen ausgehend von der Luftauslassöffnung nach außen bis hin zu dem Luftaustrittsspalt. Sie begrenzt den Radialkanal in axialer Richtung in die von dem Wirbelführungselement abgewandte Richtung.

Um besonders geringe strömungstechnische Verluste innerhalb des Radialkanals zu realisieren, ist die Luftumlenkfläche durchgehend gekrümmt. Hierbei weist sie einen Krümmungsradius auf, welcher über ihre Erstreckung ausgehend von der Luftauslassöffnung bis hin zu dem Luftaustrittsspalt konstant sein kann. Es kann jedoch auch vorgesehen sein, dass sich der Krümmungsradius über die Erstreckung der Luftumlenkfläche in radialer Richtung nach außen verändert. Vorzugsweise bleibt er hierbei jedoch stets in dem Krümmungsradiusbereich. Insbesondere ist der Krümmungsradius derart gewählt, dass er sich über die gesamte Erstreckung der Luftumlenkfläche in radialer Richtung von innen nach außen um höchstens 10 %, höchstens 5 %, höchstens 2,5 % oder höchstens 1 % ändert. Falls der Krümmungsradius konstant bleibt, weist die Luftumlenkfläche im Schnitt gesehen die Gestalt eines Teilkreises auf. Dies ermöglicht die Realisierung besonders geringer Strömungsverluste.

Eine Weiterbildung der Erfindung sieht vor, dass im Schnitt gesehen der Krümmungsradius der Luftumlenkfläche größer ist als ein Krümmungsradius einer den Radialkanal begrenzenden Luftführungsfläche des Wirbelführungselements. Der Radialkanal wird also im Schnitt gesehen einerseits von der Luftumlenkfläche des Luftumlenkelements und andererseits von der Luftführungsfläche des Wirbelführungselements begrenzt. Die Luftführungsfläche bildet hierbei die zweite Profilfläche zumindest bereichsweise aus. Für den Krümmungsradius der Luftführungsfläche gilt das für den Krümmungsradius der Luftumlenkfläche Gesagte analog. Bevorzugt ist der Krümmungsradius über die gesamte Erstreckung der Luftumlenkfläche konstant, nämlich ausgehend von der Luftauslassöffnung bis hin zu dem Luftaustrittsspalt. Hierbei ist der Krümmungsradius der Luftumlenkfläche größer als der Krümmungsradius der Luftführungsfläche. Die dem Luftumlenkelement zugewandte Seite des Wirbelführungselements kann insoweit im Schnitt ebenfalls kreisförmig sein. Auch dies dient der Realisierung geringer Strömungsverluste.

Eine Weiterbildung der Erfindung sieht vor, dass der Krümmungsradius der Luftumlenkfläche und der Krümmungsradius der Luftführungsfläche derart gewählt sind, dass sich der Durchströmungsquerschnitt des Radialkanals ausgehend von der Luftauslassöffnung bis hin zu dem Luftaustrittsspalt durchgehend verkleinert. Durch die unterschiedliche Wahl der Krümmungsradien wird also auf konstruktiv einfache Art und Weise die düsenförmige Gestalt des Radialkanals realisiert.

Eine Weiterbildung der Erfindung sieht vor, dass das Wirbelführungselement bezüglich des Luftumlenkelements zur globalen und/oder lokalen Veränderung eines Durchströmungsquerschnitts des Luftaustrittsspalts verlagerbar ist, insbesondere zum Einstellen eines Schubvektors des Triebwerks. Das Luftumlenkelement ist folglich bezüglich des Wirbelführungselements derart verlagerbar, insbesondere mittels eines Steuerantriebs, dass die Größe des Luftaustrittsspalt verändert wird, nämlich entweder in Umfangsrichtung global und/oder lokal. Unter der globalen Veränderung des Luftaustrittsspalts beziehungsweise der Durchströmungsquerschnittsfläche des Luftaustrittsspalts ist zu verstehen, dass die Größe des Luftaustrittsspalts beziehungsweise der Durchströmungsquerschnittsfläche gleichmäßig über die gesamte Erstreckung des Luftaustrittsspalts verändert wird, also vergrößert oder verkleinert wird. Die lokale Veränderung bedeutet hingegen eine lediglich bereichsweise Vergrößerung oder Verkleinerung des Luftaustrittsspalts beziehungsweise der Durchströmungsquerschnittsfläche. Beispielsweise wird zur lokalen Veränderung das Luftumlenkelement derart verlagert, dass der Luftaustrittsspalt bereichsweise vergrößert und bereichsweise verkleinert wird. Durch die Veränderung der Durchströmungsquerschnittsfläche des Luftaustrittsspalts lässt sich eine Steuerung des Schubvektors auf einfache Art und Weise bewerkstelligen.

Eine Weiterbildung der Erfindung sieht vor, dass zur globalen Veränderung der Durchströmungsquerschnittsfläche des Luftaustrittsspalts der Abstand des Luftumlenkelements zu dem Wirbelführungselement gleichmäßig veränderbar ist. Unter dem gleichmäßigen Verändern ist ein gleichmäßiges Vergrößern oder ein gleichmäßiges Verkleinern des Luftaustrittsspalts zu verstehen. Beispielsweise wird hierzu das Luftumlenkelement parallel zu der Längsmittelachse des Wirbelführungselements verlagert, nämlich zur Vergrößerung der Luftaustrittsfläche von dem Wirbelführungselement fort und zur Verkleinerung der Durchströmungsquerschnittsfläche auf das Wirbelführungselement zu. Dies ermöglicht ein besonders effektives Steuern des Schubvektors durch ein Einstellen der Wirbelintensität des Tragwirbels.

Eine Weiterbildung der Erfindung sieht vor, dass zur lokalen Veränderung der Durchströmungsquerschnittsfläche des Luftaustrittsspalts das Luftumlenkelement bezüglich des Wirbelführungselements verkippbar ist. Durch das Verkippen des Luftumlenkelements wird der Luftaustrittsspalt lokal verändert, insbesondere teilweise vergrößert und teilweise verkleinert. Das Verkippen erfolgt beispielsweise bezüglich der Längsmittelachse des Wirbelführungselements. Bevorzugt ist das Luftumlenkelement derart ausgestaltet, dass bei einer parallelen Ausrichtung des Luftumlenkelements bezüglich der Längsmittelachse des Wirbelführungselement und insoweit einem Winkel von 0° der Luftaustrittsspalt in Umfangsrichtung bezüglich der Längsmittelachse eine durchgehend gleichbleibende Größe aufweist. Bei einer Veränderung des Winkels tritt hingegen die lokale Veränderung der Durchströmungsquerschnittsfläche auf. Wiederum ermöglicht eine solche Ausgestaltung eine besonders effiziente Steuerung des Schubvektors.

Eine Weiterbildung der Erfindung sieht vor, dass in dem Radialkanal Steuerelemente drehbar gelagert sind, die jeweils eine Steuerfinne aufweisen. Die Steuerelemente dienen einer Einstellung des Schubvektors des Triebwerks, nämlich durch Beeinflussung der Richtung, in welcher die Luft aus dem Luftaustrittsspalt austritt. Jedes der Steuerelemente verfügt über jeweils eine Steuerfinne, welche beispielsweise plattenartig oder tragflächenartig ausgestaltet ist. Die Steuerfinne kann in letzterem Fall bezüglich ihrer Profilsehne symmetrisch sein oder ein strömungstechnisches Profil aufweisen. Die Steuerelemente ermöglichen beispielsweise die Erzeugung eines Schubs in Umfangsrichtung, sodass sich das Triebwerk beziehungsweise der damit angetriebene Flugkörper auf der Stelle um ihre Längsmittelachse drehen können.

Eine Weiterbildung der Erfindung sieht vor, dass die Steuerelemente über ein gemeinsames Koppelelement mit einem Steuerantrieb des Triebwerks antriebstechnisch gekoppelt sind. Der Steuerantrieb dient dem Verstellen der Steuerelemente. Er ist lediglich mittelbar über das gemeinsame Koppelelement an die Steuerelemente antriebstechnisch angebunden. Hierzu greifen einerseits die Steuerelemente und andererseits der Steuerantrieb an dem Koppelelement an. Insbesondere greift der Steuerantrieb beabstandet von den Steuerelementen an den Koppelantrieb an. Hierdurch wird ein gleichzeitiges Verstellen der Steuerelemente mittels des Steuerantriebs realisiert. Auch das Luftumlenkelement kann zusätzlich oder alternativ an das Koppelelement angebunden sein.

Eine Weiterbildung der Erfindung sieht vor, dass das Koppelelement jeweils über ein Kugelgelenk und einen Hebelarm mit den Steuerelementen und/oder dem Steuerantrieb gekoppelt ist. Jedem Steuerelement und/oder dem Steuerantrieb ist insoweit jeweils ein Kugelelement und ein Hebelarm zugeordnet, mittels welchem sie mit dem Steuerantrieb antriebstechnisch verbunden sind. Die Verwendung des Kugelgelenks stellt ein äußerst flexibles Einstellen der Steuerelemente mittels des Steuerantriebs sicher.

Eine Weiterbildung der Erfindung sieht vor, dass das Koppelelement als Steuerring ausgebildet ist. Der Steuerring umgreift vorzugsweise die Längsmittelachse des Triebwerks in Umfangsrichtung durchgehend und vollständig. Er greift an den Steuerelementen an, um diese mit dem Steuerantrieb zu koppeln. Der Steuerring ist derart angeordnet, dass er nicht lediglich eine Drehbewegung in Umfangsrichtung bezüglich der Längsmittelachse beschreiben kann, sondern dass er zusätzlich verkippbar ist und somit nach Art einer Taumelscheibe vorliegt. Dies ermöglicht das bereits erwähnte flexible Betätigen der Steuerelemente mittels des Steuerantriebs.

Eine Weiterbildung der Erfindung sieht vor, dass der Steuerantrieb mehrere Stellantriebe aufweist, die jeweils beabstandet voneinander mit dem Koppelelement antriebstechnisch gekoppelt sind. Vorzugsweise sind die Stellantriebe gleichmäßig voneinander beabstandet, sodass also im Falle von zwei Stellantrieben diese mit einem Abstand von 180° an dem Koppelelement angreifen, im Falle von drei Stellantrieben mit einem Abstand von 120° und im Falle von vier Stellantrieben mit einem Abstand von 90°. Die Verwendung der mehreren Stellantriebe ermöglicht eine Verlagerung des Koppelelements nicht lediglich in Umfangsrichtung bezüglich der Längsmittelachse, sondern zusätzlich in radialer Richtung, sodass das bereits beschriebene flexible Einstellen der Steuerelemente realisiert ist.

Eine Weiterbildung der Erfindung sieht vor, dass das Luftumlenkelement und/oder das Wirbelführungselement eine fluiddichte Auftriebskammer aufweist, die mit einem Gas gefüllt ist, das eine geringere Dichte aufweist als Luft. Das Wirbelführungselement und/oder das Luftumlenkelement ist folglich als Auftriebskörper ausgestaltet. Mithilfe des Gases wird ein Auftrieb erzeugt, welcher von dem eigentlichen Schub des Triebwerks entkoppelt ist oder zumindest entkoppelt sein kann. Beispielsweise ist das Triebwerk derart ausgestaltet, dass ein Großteil des zum Anheben des Flugkörpers benötigten Auftriebs bereits mithilfe des Gases erzeugt wird, welches in der Auftriebskammer vorliegt. Der restliche Auftrieb wird mithilfe des Schubs des Triebwerks bereitgestellt, wozu dessen Schubvektor entsprechend eingestellt wird. Als Gas wird beispielsweise Helium oder dergleichen verwendet. Das Gas ermöglicht einen besonders energieeffizienten Betrieb des Triebwerks beziehungsweise des Flugkörpers.

Eine Weiterbildung der Erfindung sieht vor, dass in dem Luftumlenkelement und/oder dem Wirbelführungselement (jeweils) wenigstens ein Nutzraum des Flugkörpers, insbesondere ein Passagierraum und/oder einen Frachtraum, angeordnet ist. Hierzu sind das Luftumlenkelement und/oder das Wirbelführungselement entsprechend dimensioniert, sodass das Triebwerk eine entsprechende Größe aufweist. In dem Passagierraum ist beispielsweise wenigstens ein Passagiersitz angeordnet, insbesondere mehrere Passagiersitze, welche beispielsweise in mehreren Reihen angeordnet sind. Der Frachtraum dient zur Aufnahme von Fracht, insbesondere von Gepäck und/oder Transportgut. Auch er weist hierzu eine entsprechende Größe auf. Zum Beladen und Entladen des Nutzraums weist das Luftumlenkelement wenigstens eine reversibel verschließbare Zugangsöffnung auf, beispielsweise in Form einer Tür, eines Tors, einer Luke oder dergleichen.

In dem Nutzraum können auch ein Kraftstofftank zur Aufnahme von Kraftstoff und/oder ein Energiespeicher zur Zwischenspeicherung von elektrischer Energie angeordnet sein. Der Kraftstoff und/oder die zwischengespeicherte elektrische Energie dienen vorzugsweise zum Betreiben der Antriebseinrichtung. Hierzu ist zum Beispiel der Kraftstofftank strömungstechnisch und/oder der Energiespeicher elektrisch an die Antriebseinrichtung angeschlossen. Es kann vorgesehen sein, sowohl in dem Wirbelführungselement als auch in dem Luftumlenkelement jeweils einen Nutzraum auszubilden. In dem Nutzraum des Luftumlenkelements sind beispielsweise der Frachtraum und/oder der Kraftstofftank und/oder der Energiespeicher angeordnet. Der Nutzraum des Wirbelführungselements dient hingegen als Passagierraum. Bevorzugt ist hierbei der Nutzraum des Luftumlenkelements gegenüber der Außenumgebung drucklos, wohingegen der Nutzraum des Wirbelführungselements gegenüber der Außenumgebung einen Überdruck aufweist.

Nachfolgend werden weitere bevorzugte Ausführungsformen des Triebwerks erläutert, deren Merkmale alternativ oder zusätzlich herangezogen werden können. Beispielsweise übergreift das Luftumlenkelement das Wirbelführungselement in radialer Richtung ausgehend von seiner Längsmittelachse um wenigstens 25 %, wenigstens 50 %, wenigstens 75 % oder wenigstens 100 %. Es kann also bereits hinreichend sein, dass ein Übergreifen um höchstens 50 % realisiert ist, zum Beispiel um mindestens 25 %, mindestens 30 %, mindestens 40 % oder mindestens 50 %. Bevorzugt ist jedoch das Umgreifen über mindestens 50 % oder mehr, insbesondere über mindestens 60 % oder mindestens 75 %. Das Übergreifen kann auch über mindestens 80 %, mindestens 90 % oder mindestens 100 % erfolgen. In letzterem Fall übergreift das Luftumlenkelement das Wirbelführungselement in radialer Richtung gesehen vollständig, insbesondere genau vollständig, ragt also nicht über das Wirbelführungselement hinaus, sodass es radial außenseitig bündig mit ihm abschließt. Es kann jedoch auch vorgesehen sein, dass sich das Luftumlenkelement in radialer Richtung über das Wirbelführungselement heraus erstreckt, also in radialer Richtung größer ist als dieses. Beispielsweise weist das Luftumlenkelement in radialer Richtung Abmessungen auf, die größer sind als Abmessungen des Wirbelführungselements in derselben Richtung. Insbesondere betragen die Abmessungen des Luftumlenkelements in radialer Richtung mindestens 105 % oder mindestens 110 % der Abmessungen des Wirbelführungselements.

Besonders bevorzugt ist das Luftumlenkelement jedoch in radialer Richtung so klein wie möglich, um Strömungsverluste zu vermeiden. Das Ausmaß des Übergreifens ist dabei vorzugsweise derart gewählt, dass gerade die ablösungsfreie Umströmung des Wirbelführungselements durch die aus der Luftauslassöffnung austretende Luft erzielt wird und idealerweise nicht größer ist. Zumindest ein Teil der aus der Luftauslassöffnung und nachfolgend aus dem Luftaustrittsspalt austretenden Luft soll hierbei derart an dem Wirbelführungselement anliegen, dass er erneut bis hin zu der Lufteinlassöffnung strömt und durch diese erneut in den Ansaugkanal gefördert wird. Beispielsweise reicht hierzu ein Übergreifen des Wirbelführungselements durch das Luftumlenkelement in radialer Richtung um höchstens 90 %, höchstens 80 % oder höchstens 70 % aus.

Das Luftumlenkelement weist beispielsweise ein Volumen auf, welches einem Volumen des Wirbelführungselements zumindest entspricht. Bevorzugt ist das Volumen des Luftumlenkelements größer als das Volumen des Wirbelführungselements, insbesondere ist es um einen Faktor von mindestens 1,25, mindestens 1,5, mindestens 1,75 oder mindestens 2 größer. Somit steht das Luftumlenkelement bevorzugt zur Unterbringung eines Nutzraums des Flugkörpers zur Verfügung. Der Nutzraum kann zum Beispiel einen Passagierraum und/oder einen Frachtraum aufweisen oder als ein solcher vorliegen. Es kann jedoch auch vorgesehen sein, dass das Volumen des Luftumlenkelements höchstens dem Volumen des Wirbelführungselements entspricht oder kleiner ist als dieses. Zum Beispiel beträgt das Volumen des Luftumlenkelements höchstens 75 %, beispielsweise höchstens 70 %, höchstens 60 % oder höchstens 50 %, des Volumens des Wirbelführungselements. Bei einer solchen Ausgestaltung kann es vorgesehen sein, dass der Nutzraum in dem Wirbelführungselement angeordnet ist.

Es kann vorgesehen sein, dass das Luftumlenkelement eine Erstreckung in axialer Richtung aufweist, die zumindest einer Erstreckung des Wirbelführungselements in derselben Richtung entspricht. Vorzugsweise ist die Erstreckung des Luftumlenkelements in axialer Richtung größer als die des Wirbelführungselements, insbesondere um einen Faktor von mindestens 1,25, mindestens 1,5, mindestens 1,75 oder mindestens 2. Hierdurch kann das vorstehend bereits beschriebene große Volumen des Luftumlenkelements auf einfache Art und Weise realisiert werden, sodass zum Beispiel der Nutzraum geräumig gestaltet ist. Die Erfindung betrifft weiterhin ein Verfahren zum Betreiben eines Triebwerks für einen Flugkörper, insbesondere eines Triebwerks gemäß den Ausführungen im Rahmen dieser Beschreibung, wobei das Triebwerk über ein ringförmiges Wirbelführungselement verfügt, das im Schnitt gesehen eine bezüglich einer Längsmittelachse des Triebwerks zentral angeordnete Lufteinlassöffnung und beabstandet von der Lufteinlassöffnung eine bezüglich der Längsmittelachse zentral angeordnete Luftauslassöffnung aufweist, die über einen von dem Wirbelführungselement begrenzten und eine Luftfördereinrichtung aufnehmenden Ansaugkanal strömungstechnisch aneinander angeschlossen sind, wobei die Luftauslassöffnung von einem bei bestimmungsgemäßem Betrieb des Triebwerks geodätisch oberhalb des Wirbelführungselements angeordneten Luftumlenkelement übergriffen ist, das sich ausgehend von der Luftauslassöffnung in radialer Richtung nach außen erstreckt, sodass es mit dem Wirbelführungselement einen mit der Luftauslassöffnung in Strömungsverbindung stehenden Luftaustrittsspalt begrenzt.

Dabei ist vorgesehen, dass das Wirbelführungselement als Rotationskörper vorliegt, der durch Rotation einer zumindest auf ihrer radial außen liegenden Seite einen stetigen Verlauf aufweisenden geschlossenen Kurve um eine Rotationsachse gebildet ist, und dass die Lufteinlassöffnung unmittelbar in eine Außenumgebung des Triebwerks einmündet, sodass bei bestimmungsgemäßem Betrieb des Triebwerks Luft von der dem Luftumlenkelement abgewandten Seite des Triebwerks durch die Lufteinlassöffnung in den Ansaugkanal gefördert wird.

Auf die Vorteile einer derartigen Ausgestaltung des Triebwerks beziehungsweise einer derartigen Vorgehensweise wurde bereits hingewiesen. Sowohl das Triebwerk als auch das Verfahren zu seinem Betreiben können gemäß den Ausführungen im Rahmen dieser Beschreibung weitergebildet sein, sodass insoweit auf diese verwiesen wird.

Wie bereits erläutert, erfolgt das Betreiben des Triebwerks derart, dass sich um das Wirbelführungselement herum der Tragwirbel ausbildet. Dieser zieht zusätzlich Luft aus der Außenumgebung an und transportiert sie unter das Triebwerk, wo sie zur Bereitstellung des Schubs dient. Der Tragwirbel dient somit schlussendlich als Fördermittel für Luft aus der Außenumgebung, welche von der dem Wirbelführungselement abgewandten Seite des Luftumlenkelements und/oder aus der Umgebung des Wirbelführungselements angesaugt und dem Tragwirbel zumindest vorübergehend zugeschlagen wird.

Die aus dem Luftaustrittsspalt austretende Luft sowie die in den Tragwirbel eingetragene Luft aus der Außenumgebung werden von dem Tragwirbel auf die dem Luftumlenkelement abgewandte Seite des Wirbelführungselements gefördert, nämlich teilweise bis hin zur Längsmittelachse. Von dort wird ein Teil der Luft durch die Lufteinlassöffnung in den Ansaugkanal gefördert, wohingegen ein anderer Teil der Luft in die von dem Luftführungselement abgewandte Richtung des Wirbelführungselements umgelenkt wird, um einen Schubstrahl des Triebwerks und damit den Schub des Triebwerks zu erzeugen. Ein Teil der von dem Tragwirbel in Richtung der Längsmittelachse geförderten Luft wird also in Richtung des Wirbelführungselements und ein anderer Teil in die von dem Wirbelführungselement abgewandte Richtung umgelenkt.

Die Erfindung betrifft zudem einen Flugkörper mit wenigstens einem Triebwerk gemäß den Ausführungen im Rahmen dieser Beschreibung, wobei das Triebwerk über ein ringförmiges Wirbelführungselement verfügt, das im Schnitt gesehen eine bezüglich einer Längsmittelachse des Triebwerks zentral angeordnete Lufteinlassöffnung und beabstandet von der Lufteinlassöffnung eine bezüglich der Längsmittelachse zentral angeordnete Luftauslassöffnung aufweist, die über einen von dem Wirbelführungselement begrenzten und eine Luftfördereinrichtung aufnehmenden Ansaugkanal strömungstechnisch aneinander angeschlossen sind, wobei die Luftauslassöffnung von einem bei bestimmungsgemäßem Betrieb des Triebwerks geodätisch oberhalb des Wirbelführungselements angeordneten Luftumlenkelement übergriffen ist, das sich ausgehend von der Luftauslassöffnung in radialer Richtung nach außen erstreckt, sodass es mit dem Wirbelführungselement einen mit der Luftauslassöffnung in Strömungsverbindung stehenden Luftaustrittsspalt begrenzt.

Dabei ist vorgesehen, dass das Wirbelführungselement als Rotationskörper vorliegt, der durch Rotation einer zumindest auf ihrer radial außen liegenden Seite einen stetigen Verlauf aufweisenden geschlossenen Kurve um eine Rotationsachse gebildet ist, und dass die Lufteinlassöffnung unmittelbar in eine Außenumgebung des Flugkörpers einmündet, sodass bei bestimmungsgemäßem Betrieb des Triebwerks Luft von der dem Luftumlenkelement abgewandten Seite des Triebwerks durch die Lufteinlassöffnung in den Ansaugkanal gefördert wird.

Erneut wird hinsichtlich der Vorteile und möglicher vorteilhafter Weiterbildungen auf die weiteren Ausführungen im Rahmen dieser Beschreibung verwiesen.

Eine Weiterbildung der Erfindung sieht vor, dass der Flugkörper als Luftfahrzeug oder als flugfähiges Kraftfahrzeug ausgestaltet ist. Im Falle der Ausgestaltung als Luftfahrzeug befindet sich vorzugsweise in dem Luftumlenkelement ein Nutzraum des Flugzeugs, beispielsweise ein Passagierraum beziehungsweise Frachtraum. Das Triebwerk bildet hierbei den Flugkörper aus oder anders ausgedrückt besteht der Flugkörper vollständig oder zumindest im Wesentlichen vollständig aus dem Triebwerk. Selbstverständlich kann der Flugkörper jedoch auch mehrere Triebwerke aufweisen, die beabstandet voneinander angeordnet sind. Ist der Flugkörper hingegen als flugfähiges Kraftfahrzeug ausgebildet, so umfasst er vorzugsweise mehrere Triebwerke. Diese sind beabstandet voneinander an dem Kraftfahrzeug angeordnet, um es zeitweise von dem Boden abzuheben.

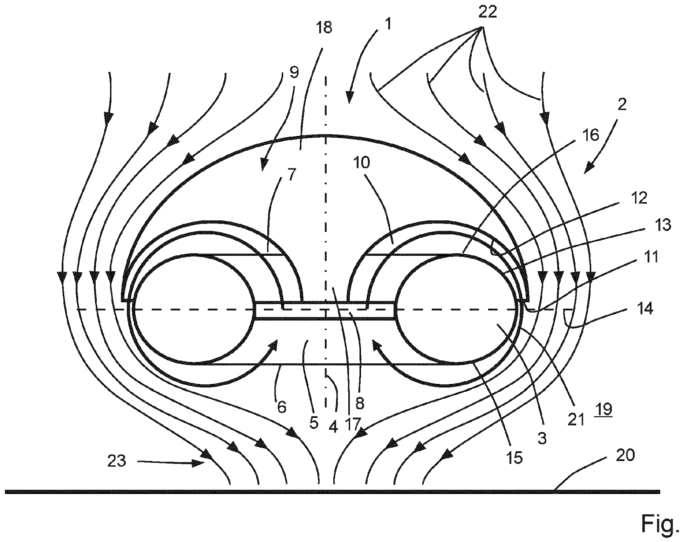

Die Erfindung wird nachfolgend anhand der in der Zeichnung dargestellten Ausführungsbeispiele näher erläutert, ohne dass eine Beschränkung der Erfindung erfolgt, insofern diese unter den Umfang der Ansprüche fallen. Dabei zeigt die einzige Figur eine schematische Darstellung eines Flugkörpers mit einem Triebwerk.

Die Figur zeigt eine schematische Längsschnittdarstellung eines Flugkörpers 1 mit einem Triebwerk 2 zum Bereitstellen eines Antriebs für den Flugkörper 1. In dem hier dargestellten Ausführungsbeispiel besteht der Flugkörper 1 im Wesentlichen aus dem Triebwerk 2. Selbstverständlich kann der Flugkörper auch über mehrere Triebwerke 2 verfügen, welche in diesem Fall über eine gemeinsame Struktur miteinander verbunden sind.

Das Triebwerk 2 weist ein ringförmiges Wirbelführungselement 3 auf. In dem hier dargestellten Ausführungsbeispiel ist das Wirbelführungselement 3 als Rotationskörpers, insbesondere als Rotationstorus, bezüglich einer Längsmittelachse 4 des Wirbelführungselements 3 ausgebildet. Die Längsmittelachse 4 ist auch zugleich die Längsmittelachse des Flugkörpers 1. Das Wirbelführungselement 3 umgreift in Umfangsrichtung durchgehend und vollständig einen Ansaugkanal 5 mit einer Lufteinlassöffnung 6 und einer Luftauslassöffnung 7. In dem Ansaugkanal 5 ist eine Luftfördereinrichtung 8 angeordnet, welche beispielsweise als Propeller ausgestaltet ist und mittels einer hier nicht gezeigten Antriebseinrichtung antreibbar ist. Sowohl die Lufteinlassöffnung 6 als auch die Luftauslassöffnung 7 sind zentral bezüglich der Längsmittelachse 4 angeordnet. Insoweit liegen sie zueinander koaxial vor.

Das Wirbelführungselement 3 ist wenigstens bereichsweise von einem Luftumlenkelement 9 übergriffen. Das Luftumlenkelement 9 weist ebenfalls eine Längsmittelachse auf, welche in dem hier dargestellten Ausführungsbeispiel mit der Längsmittelachse 4 zusammenfällt. Das Luftumlenkelement 9 ist bezüglich des Wirbelführungselements 3 mittig angeordnet und übergreift insoweit zumindest die Luftauslassöffnung 7, nämlich in radialer Richtung vollständig. Gezeigt ist ein Ausführungsbeispiel des Flugkörpers 1 beziehungsweise des Triebwerks 2, bei welchem sich das Luftumlenkelement 9 in radialer Richtung bis über das Wirbelführungselement 3 hinaus erstreckt. In anderen Worten übergreift das Luftumlenkelement 9 das Wirbelführungselement 3 im Schnitt gesehen vollständig und ragt in radialer Richtung nach außen über dieses hinaus.

Das Wirbelführungselement 3 und das Luftumlenkelement 9 begrenzen gemeinsam einen Radialkanal 10, welcher einerseits von der Luftauslassöffnung 7 ausgeht und sich andererseits bis hin zu einem Luftaustrittsspalt 11 erstreckt. Es ist erkennbar, dass sich der Radialkanal 10 in dem hier dargestellten Ausführungsbeispiel ausgehend von der Luftauslassöffnung 7 bis hin zu dem Luftaustrittsspalt 11 kontinuierlich verkleinert, also einen kleiner werdenden Durchströmungsquerschnitt aufweist. Hierzu nähert sich in radialer Richtung nach außen eine Luftumlenkfläche 12 des Luftumlenkelements 9 einer Luftführungsfläche 13 des Wirbelführungselements 3 kontinuierlich an.

Das Wirbelführungselement 3 wird in axialer Richtung bezüglich der Längsmittelachse 4 mittig von einer gedachten Ebene 14 geschnitten, welche das Wirbelführungselement 3 im Schnitt gesehen in eine erste Profilfläche 15 und in eine zweite Profilfläche 16 aufteilt. Die erste Profilfläche 15 liegt hierbei auf einer dem Luftumlenkelement 9 abgewandte Seite des Luftführungselements 3 vor, wohingegen die zweite Profilfläche 16 auf einer dem Luftumlenkelement 9 zugewandten Seite des Wirbelführungselements 3 angeordnet ist. Es ist erkennbar, dass auch die Luftfördereinrichtung 8 in axialer Richtung in etwa mittig in dem Ansaugkanal 5 angeordnet ist, sodass die gedachte Ebene 14 die Luftfördereinrichtung 8 schneidet. Die Luftfördereinrichtung 8 ist an einem Vorsprung 17 gelagert, der von einem Grundkörper 18 des Luftumlenkelements 9 ausgeht. Der Vorsprung 17 erstreckt sich durch die Luftauslassöffnung 7 in den Ansaugkanal 5 hinein.

Es ist vorgesehen, das Triebwerk 2 derart zu betreiben, dass Luft aus einer Außenumgebung 19 durch die Lufteinlassöffnung 6 in den Ansaugkanal 5 gefördert wird. Nachfolgend wird die Luft aus dem Ansaugkanal 5 über die Luftauslassöffnung 7 in den Radialkanal 10 gefördert, aus welchem sie schlussendlich durch den Luftaustrittsspalt 11 erneut in die Außenumgebung 19 austritt. Hierbei erfolgt eine Umlenkung der Luft um wenigstens 90°, wenigstens 135°, wenigstens 150°, wenigstens 165° oder wenigstens 180°. In dem hier dargestellten Ausführungsbeispiel wird die Luft nach ihrem Eintreten in den Ansaugkanal 5 durch die Lufteinlassöffnung 6 bis zu ihrem Austreten aus dem Radialkanal 10 durch den Luftaustrittsspalt 11 um nahezu 180° umgelenkt. Die Luft wird also aus dem Triebwerk 2 in die entgegengesetzte Richtung ausgestoßen, in welche es in sie hineingefördert wurde.

Dies gilt im Übrigen für den gesamten Flugkörper 1, dessen untersten Teil das Triebwerk 2 bildet. Das bedeutet, dass auf der dem Luftumlenkelement 9 abgewandten Seite des Wirbelführungselements 3 kein weiteres Element des Flugkörpers 1 und/oder des Triebwerks 2 angeordnet ist. Die Lufteinlassöffnung 6 ist insoweit überdeckungsfrei ausgestaltet, sodass ein unterhalb der Lufteinlassöffnung 6 angeordneter freier Luftraum in der Außenumgebung 19 vorliegt beziehungsweise einen Teil der Außenumgebung 19 bildet. Der freie Luftraum unterhalb der Lufteinlassöffnung 6 ist vollständig mit Luft gefüllt. In anderen Worten befindet sich zwischen dem Wirbelführungselement 3 und einem Boden 20, über welchem sich der Flugkörper 1 befindet, kein weiteres Element des Flugkörpers 1 und/oder des Triebwerks 2, sodass dieser versperrungsfrei beziehungsweise verblockungsfrei ausgebildet ist.

Durch das Fördern der Luft in den Ansaugkanal 5 durch die Lufteinlassöffnung 6 und das Ausbringen der Luft durch den Luftaustrittsspalt 11 wird ein Tragwirbel 21 erzeugt, der im Schnitt gesehen das Wirbelführungselement 3 umgreift. Der Tragwirbel 21 ist ebenso wie das Wirbelführungselement 3 torusförmig, insbesondere rotationstorusförmig. Der Schub des Triebwerks 2 wird nun zum einen durch eine höhere Strömungsgeschwindigkeit der Luft in dem Radialkanal 10 im Vergleich mit einer Strömungsgeschwindigkeit der Luft außerhalb des Radialkanals 10 beziehungsweise auf der dem Radialkanal 10 gegenüberliegenden Seite des Wirbelführungselements 3 erzielt.

Ein weiterer Teil des Schubs wird zumindest zeitweise mithilfe des Tragwirbels 21 bereitgestellt. Der Tragwirbel fördert Luft aus der Außenumgebung 19 entlang der hier rein beispielhaft dargestellten Stromlinien 22 auf die dem Luftumlenkelement 9 abgewandte Seite des Wirbelführungselements 3. Insbesondere wird hierbei auch Luft von der dem Wirbelführungselement 3 abgewandten Seite des Luftumlenkelements 9 angesaugt und gemäß den Stromlinien 22 auf die gegenüberliegende Seite des Triebwerks 2 gefördert. Hierdurch bildet sich auf der dem Luftumlenkelement 9 abgewandten Seite des Wirbelführungselements 3 ein Schubstrahl 23 aus, welcher den vorstehend erwähnten Teil des Schubs bewirkt. Der Tragwirbel 21 arbeitet insoweit als Luftfördermittel, welcher die Effizienz der Luftfördereinrichtung 8 deutlich erhöht.

Bei der hier dargestellten Anordnung von Wirbelführungselement 3 und Luftumlenkelement 9 zueinander ist ein Schubvektor des Triebwerks 2 parallel zu der Längsmittelachse 4 ausgerichtet. Um den Schubvektor zu verkippen und insoweit eine Steuerung des Flugkörpers 1 zu ermöglichen, sind das Wirbelführungselement 3 und das Luftumlenkelement 9 gegeneinander verlagerbar, nämlich derart, dass der Luftaustrittsspalt 11 in seiner Größe veränderbar ist, insbesondere lokal veränderbar ist. Das bedeutet, dass entweder die Größe des Luftaustrittsspalts 11 über den Umfang des Triebwerks 2 hinweg gleichmäßig verändert wird, oder aber ungleichmäßig. Beispielsweise wird auf einer Seite des Triebwerks 2 der Luftaustrittsspalt 11 vergrößert und auf der gegenüberliegenden Seite verkleinert, sodass sich unterschiedliche Strömungsgeschwindigkeiten der aus dem Luftaustrittsspalt 11 ausströmenden Luft ergeben.

Der beschriebene Flugkörper 1 hat den Vorteil, dass er aufgrund der Nutzung des Tragwirbels 21 zur Bereitstellung zumindest eines Teils des Schubs äußerst energieeffizient arbeitet. Zudem ist eine Steuerung des Flugkörpers 1 mittels des Verlagerns von Wirbelführungselement 3 und Luftumlenkelement 9 gegeneinander äußerst präzise möglich. Insbesondere kann der Flugkörper 1 analog zu einem Hubschrauber in der Luft schweben. Dennoch kann er recht hohe Geschwindigkeiten erzielen, weil er im Unterschied zu dem Hubschrauber nicht durch eine maximale Strömungsgeschwindigkeit an den Blattspitzen eines Rotors begrenzt ist.

## Patentansprüche

1. Triebwerk (2) für einen Flugkörper (1), mit einem ringförmigen Wirbelführungselement (3), das im Schnitt gesehen eine bezüglich einer Längsmittelachse (4) des Triebwerks (2) zentral angeordnete Lufteinlassöffnung (6) und beabstandet von der Lufteinlassöffnung (6) eine bezüglich der Längsmittelachse (4) zentral angeordnete Luftauslassöffnung (7) aufweist, die über einen von dem Wirbelführungselement (3) begrenzten und eine Luftfördereinrichtung (8) aufnehmenden Ansaugkanal (5) strömungstechnisch aneinander angeschlossen sind, wobei die Luftauslassöffnung (7) von einem bei bestimmungsgemäßem Betrieb des Triebwerks (2) geodätisch oberhalb des Wirbelführungselements (3) angeordneten Luftumlenkelement (9) übergriffen ist, das sich ausgehend von der Luftauslassöffnung (7) in radialer Richtung nach außen erstreckt, sodass es mit dem Wirbelführungselement (3) einen mit der Luftauslassöffnung (7) in Strömungsverbindung stehenden Luftaustrittsspalt (11) begrenzt, wobei das Wirbelführungselement (3) als Rotationskörper vorliegt, der durch Rotation einer zumindest auf ihrer radial außen liegenden Seite durchgehend einen stetigen Verlauf aufweisenden geschlossenen Kurve um eine Rotationsachse gebildet ist, und **dadurch gekennzeichnet, dass** die Lufteinlassöffnung (6) unmittelbar in eine Außenumgebung (19) des Triebwerks (2) einmündet, sodass in einer gedachten Verlängerung des Ansaugkanals (5) auf Seiten der Lufteinlassöffnung (6) ein freier Luftraum vorliegt und bei bestimmungsgemäßem Betrieb des Triebwerks (2) Luft von der dem Luftumlenkelement (9) abgewandten Seite des Triebwerks (2) durch die Lufteinlassöffnung (6) unmittelbar aus der Außenumgebung in den Ansaugkanal (5) gefördert wird.

2. Triebwerk nach Anspruch 1, **dadurch gekennzeichnet, dass** das Wirbelführungselement (3) im Schnitt gesehen einerseits von einer ersten Profilfläche (15) und andererseits von einer zweiten Profilfläche (16) begrenzt ist, wobei die beiden Profilflächen (15, 16) beidseitig unmittelbar und stetig ineinander übergehen.

3. Triebwerk nach einem der vorhergehenden Ansprüche, **dadurch gekennzeichnet, dass** das Wirbelführungselement (3) als Rotationskörper ausgebildet ist.

4. Triebwerk nach einem der vorhergehenden Ansprüche, **dadurch gekennzeichnet, dass** der Luftaustrittsspalt (11) mit der Luftauslassöffnung (7) über einen Radialkanal (10) in Strömungsverbindung steht, der einen sich in Richtung des Luftaustrittsspalts (11) verkleinernden Durchströmungsquerschnitt aufweist, sodass er nach Art einer Düse ausgestaltet ist.

5. Triebwerk nach einem der vorhergehenden Ansprüche, **dadurch gekennzeichnet, dass** das Luftumlenkelement (9) das Wirbelführungselement (3) in radialer Richtung vollständig übergreift.

6. Triebwerk nach einem der vorhergehenden Ansprüche, **dadurch gekennzeichnet, dass** das Luftumlenkelement (9) einen in den Ansaugkanal (5) eingreifenden Vorsprung (17) aufweist, an welchem eine Antriebseinrichtung zum Antreiben der Luftfördereinrichtung (8) befestigt ist.

7. Triebwerk nach einem der vorhergehenden Ansprüche, **dadurch gekennzeichnet, dass** eine den Radialkanal (10) begrenzende, dem Wirbelführungselement (3) zugewandte Luftumlenkfläche (12) des Luftumlenkelements (9) im Schnitt gesehen durchgehend gekrümmt ist.

8. Triebwerk nach einem der vorhergehenden Ansprüche, **dadurch gekennzeichnet, dass** im Schnitt gesehen der Krümmungsradius der Luftumlenkfläche (12) größer ist als ein Krümmungsradius einer den Radialkanal (10) begrenzenden Luftführungsfläche (13) des Wirbelführungselements (3).

9. Triebwerk nach einem der vorhergehenden Ansprüche, **dadurch gekennzeichnet, dass** der Krümmungsradius der Luftumlenkfläche (12) und der Krümmungsradius der Luftführungsfläche (13) derart gewählt sind, dass sich der Durchströmungsquerschnitt des Radialkanals (10) ausgehend von der Luftauslassöffnung (7) bis hin zu dem Luftaustrittsspalt (11) durchgehend verkleinert.

10. Triebwerk nach einem der vorhergehenden Ansprüche, **dadurch gekennzeichnet, dass** das Wirbelführungselement (3) bezüglich des Luftumlenkelements (9) zur globalen und/oder lokalen Veränderung eines Durchströmungsquerschnitts des Luftaustrittsspalts (11) verlagerbar ist.

11. Triebwerk nach einem der vorhergehenden Ansprüche, **dadurch gekennzeichnet, dass** das Luftumlenkelement (9) und/oder das Wirbelführungselement (3) eine fluiddichte Auftriebskammer aufweist, die mit einem Gas gefüllt ist, das eine geringere Dichte aufweist als Luft.

12. Triebwerk nach einem der vorhergehenden Ansprüche, **dadurch gekennzeichnet, dass** in dem Luftumlenkelement (9) und/oder dem Wirbelführungselement (3) wenigstens ein Nutzraum des Flugkörpers (1) angeordnet ist.

13. Verfahren zum Betreiben eines Triebwerks (2) für einen Flugkörper (1), insbesondere eines Triebwerks (2) nach einem oder mehreren der vorhergehenden Ansprüche, wobei das Triebwerk (2) über ein ringförmiges Wirbelführungselement (3) verfügt, das im Schnitt gesehen eine bezüglich einer Längsmittelachse (4) des Triebwerks (2) zentral angeordnete Lufteinlassöffnung (6) und beabstandet von der Lufteinlassöffnung (6) eine bezüglich der Längsmittelachse (4) zentral angeordnete Luftauslassöffnung (7) aufweist, die über einen von dem Wirbelführungselement (3) begrenzten und eine Luftfördereinrichtung (8) aufnehmenden Ansaugkanal (5) strömungstechnisch aneinander angeschlossen sind, wobei die Luftauslassöffnung (7) von einem bei bestimmungsgemäßem Betrieb des Triebwerks (2) geodätisch oberhalb des Wirbelführungselements (3) angeordneten Luftumlenkelement (9) übergriffen ist, das sich ausgehend von der Luftauslassöffnung (7) in radialer Richtung nach außen erstreckt, sodass mit dem Wirbelführungselement (3) einen mit der Luftauslassöffnung (7) in Strömungsverbindung stehenden Luftaustrittsspalt (11) begrenzt, wobei das Wirbelführungselement (3) als Rotationskörper vorliegt, der durch Rotation einer zumindest auf ihrer radial außen liegenden Seite durchgehend einen stetigen Verlauf aufweisenden geschlossenen Kurve um eine Rotationsachse gebildet ist, und **dadurch gekennzeichnet, dass** die Lufteinlassöffnung (6) unmittelbar in eine Außenumgebung (19) des Triebwerks (2) einmündet, sodass in einer gedachten Verlängerung des Ansaugkanals (5) auf Seiten der Lufteinlassöffnung (6) ein freier Luftraum vorliegt und bei bestimmungsgemäßem Betrieb des Triebwerks (2) Luft von der dem Luftumlenkelement (9) abgewandten Seite des Triebwerks (2) durch die Lufteinlassöffnung (6) unmittelbar aus der Außenumgebung in den Ansaugkanal (5) gefördert wird.

14. Flugkörper (1) mit wenigstens einem Triebwerk (2) nach einem oder mehreren der Ansprüche 1-12.

15. Flugkörper nach Anspruch 14, **gekennzeichnet durch** eine Ausgestaltung als Luftfahrzeug oder als flugfähiges Kraftfahrzeug.

## Claims

1. Engine (2) for a flying body (1), having an annular vortex guide element (3) which, seen in section, has an air inlet opening (6) arranged centrally with respect to a longitudinal central axis (4) of the engine (2) and, at a distance from the air inlet opening (6), an air outlet opening (7) arranged centrally with respect to the longitudinal central axis (4), which are connected to one another in terms of flow via an intake duct (5) which is bounded by the vortex guide element (3) and accommodates an air conveying device (8), wherein the air outlet opening (7) is overlapped by an air deflecting element (9) which is arranged geodetically above the vortex guide element (3) when the engine (2) is operating as intended, which extends radially outwards from the air outlet opening (7) so that, together with the vortex guide element (3), it delimits an air exit gap (11) which is in flow communication with the air outlet opening (7), wherein the vortex guide element (3) is in the form of a body of rotation which is formed by rotation about an axis of rotation of a closed curve continuously comprising a continuous course at least on its radially outer side, **characterised in that** the air inlet opening (6) opens directly into an outer environment (19) of the engine (2), so that a free air space is present in an imaginary extension of the intake duct (5) on the side of the air inlet opening (6) and, when the engine (2) is operating as intended, air is conveyed from the side of the engine (2) facing away from the air deflecting element (9) through the air inlet opening (6) directly from the outer environment into the intake duct (5).

2. Engine according to claim 1, **characterised in that** the vortex guide element (3), seen in section, is bounded on one side by a first profiled surface (15) and on the other side by a second profiled surface (16), wherein the two profiled surfaces (15, 16) merge directly and continuously into one another on both sides.

3. Engine according to one of the preceding claims, **characterized in that** the vortex guide element (3) is formed as a body of rotation.

4. Engine according to one of the preceding claims, **characterized in that** the air exit gap (11) is in flow connection with the air outlet opening (7) via a radial duct (10) which has a flow cross-section which decreases in the direction of the air exit gap (11), so that it is designed in the manner of a nozzle.

5. Engine according to one of the preceding claims, **characterized in that** the air deflecting element (9) completely overlaps the vortex guide element (3) in the radial direction.

6. Engine according to one of the preceding claims, **characterised in that** the air deflecting element (9) comprises a projection (17) engaging in the intake duct (5), to which projection a drive device for driving the air conveying device (8) is attached.

7. Engine according to one of the preceding claims, **characterised in that** an air deflecting surface (12) of the air deflecting element (9) which bounds the radial duct (10) and faces the vortex guide element (3) is continuously curved when viewed in section.

8. Engine according to one of the preceding claims, **characterised in that**, seen in section, the radius of curvature of the air deflecting surface (12) is greater than a radius of curvature of an air guide surface (13) of the vortex guide element (3) bounding the radial duct (10).

9. Engine according to one of the preceding claims, **characterised in that** the radius of curvature of the air deflecting surface (12) and the radius of curvature of the air exit gap (13) are selected in such a way that the flow cross-section of the radial duct (10) decreases continuously from the air outlet opening (7) to the air exit gap (11).

10. Engine according to one of the preceding claims, **characterized in that** the vortex guide element (3) is displaceable with respect to the air deflecting element (9) for globally and/or locally changing a flow cross-section of the air exit gap (11).

11. Engine according to one of the preceding claims, **characterized in that** the air deflecting element (9) and/or the vortex guide element (3) comprises a fluid-tight buoyancy chamber filled with a gas having a lower density than air.

12. Engine according to one of the preceding claims, **characterized in that** at least one useful space of the flying body (1) is arranged in the air deflecting element (9) and/or the vortex guide element (3).

13. Method for operating an engine (2) for a flying body (1), in particular an engine (2) according to one or more of the preceding claims, wherein the engine (2) has an annular vortex guide element (3) which, seen in section, has an air inlet opening (6) arranged centrally with respect to a longitudinal central axis (4) of the engine (2) and, at a distance from the air inlet opening (6), an air outlet opening (7) arranged centrally with respect to the longitudinal central axis (4), which are connected to one another in terms of flow via an intake duct (5) which is bounded by the vortex guide element (3) and accommodates an air conveying device (8), wherein the air outlet opening (7) is overlapped by an air deflecting element (9) which is arranged geodetically above the vortex guide element (3) when the engine (2) is operating as intended, which extends radially outwards from the air outlet opening (7) so as to delimit with the vortex guide element (3) an air exit gap (11) which is in flow communication with the air outlet opening (7), wherein the vortex guide element (3) is in the form of a body of rotation which is formed by rotation about an axis of rotation of a closed curve continuously comprising a continuous course at least on its radially outer side, **characterized in in that** the air inlet opening (6) opens directly into an outer environment (19) of the engine (2), so that a free air space is present in an imaginary extension of the intake duct (5) on the side of the air inlet opening (6) and, when the engine (2) is operating as intended, air is conveyed from the side of the engine (2) facing away from the air deflecting element (9) through the air inlet opening (6) directly from the outer environment into the intake duct (5).

14. Flying body (1) with at least one engine (2) according to one or more of the claims 1 to 12.

15. Flying body according to claim 14, **characterised by** a design as an aircraft or as a motor vehicle capable of flight.

## Revendications

1. Moteur (2) pour un objet volant (1), comprenant un élément de guidage de tourbillon en forme d'anneau (3) qui présente, dans une vue en coupe, une ouverture d'entrée d'air (6) qui est située au centre par rapport à un axe central longitudinal (4) du moteur (2) et, à distance de l'ouverture d'entrée d'air (6), une ouverture de sortie d'air (7) qui est située au centre par rapport à l'axe central longitudinal (4), qui sont reliées entre elles de manière fluidique par l'intermédiaire d'un canal d'admission (5) qui est délimité par l'élément de guidage de tourbillon (3) et qui reçoit un dispositif de transport d'air (8), dans lequel l'ouverture de sortie d'air (7) est recouverte d'un élément de déviation d'air (9), qui est situé de manière géodésique au-dessus de l'élément de guidage de tourbillon (3) pendant le fonctionnement du moteur (2) tel que prévu, qui s'étend radialement vers l'extérieur à partir de l'ouverture de sortie d'air (7) de manière à délimiter, avec l'élément de guidage de tourbillon (3), un espace de sortie d'air (11) qui est en communication fluidique avec l'ouverture de sortie d'air (7), dans lequel l'élément de guidage de tourbillon (3) se présente sous la forme d'un corps rotatif qui est formé par une rotation d'une courbe fermée autour d'un axe de rotation, présentant un tracé continu au moins sur son côté radialement extérieur, et **caractérisé en ce que** l'ouverture d'entrée d'air (6) débouche directement dans un environnement extérieur (19) du moteur (2), de telle sorte qu'il existe un espace d'air libre dans une extension imaginaire du canal d'admission (5) du côté de l'ouverture d'entrée d'air (6), et pendant un fonctionnement du moteur (2) tel que prévu, de l'air est transporté depuis le côté du moteur (2) opposé à l'élément de déviation d'air (9) à travers l'ouverture d'entrée d'air (6) directement dans le canal d'admission (5) depuis l'environnement extérieur.

2. Moteur selon la revendication 1, **caractérisé en ce que** l'élément de guidage de tourbillon (3), dans une vue en coupe, est limité d'une part par une première surface profilée (15) et d'autre part par une deuxième surface profilée (16), dans lequel les deux surfaces profilées (15, 16) se confondent l'une dans l'autre de manière directe et continue des deux côtés.

3. Moteur selon l'une quelconque des revendications précédentes, **caractérisé en ce que** l'élément de guidage de tourbillon (3) est réalisé sous la forme d'un corps rotatif.

4. Moteur selon l'une quelconque des revendications précédentes, **caractérisé en ce que** l'espace de sortie d'air (11) est en communication fluidique avec l'ouverture de sortie d'air (7) par l'intermédiaire d'un canal radial (10) qui présente une section transversale d'écoulement qui se réduit en direction de l'espace de sortie d'air (11), de telle sorte qu'il est conçu à la manière d'une buse.

5. Moteur selon l'une quelconque des revendications précédentes, **caractérisé en ce que** l'élément de déviation d'air (9) recouvre complètement l'élément de guidage de tourbillon (3) dans la direction radiale.

6. Moteur selon l'une quelconque des revendications précédentes, **caractérisé en ce que** l'élément de déviation d'air (9) présente une saillie (17) mise en prise dans le canal d'admission (5), sur laquelle est fixé un dispositif d'entraînement permettant d'entraîner le dispositif de transport d'air (8).

7. Moteur selon l'une quelconque des revendications précédentes, **caractérisé en ce qu'**une surface de déviation d'air (12) de l'élément de déviation d'air (9), qui délimite le canal radial (10) et est tournée vers l'élément de guidage de tourbillon (3), est incurvée de manière continue lorsque vue en coupe.

8. Moteur selon l'une quelconque des revendications précédentes, **caractérisé en ce que**, dans une vue en coupe, le rayon de courbure de la surface de déviation d'air (12) est supérieur à un rayon de courbure d'une surface de guidage d'air (13) de l'élément de guidage de tourbillon (3) délimitant le canal radial (10).

9. Moteur selon l'une quelconque des revendications précédentes, **caractérisé en ce que** le rayon de courbure de la surface de déviation d'air (12) et le rayon de courbure de la surface de guidage d'air (13) sont choisis de telle sorte que la section transversale d'écoulement du canal radial (10) diminue en continu à partir de l'ouverture de sortie d'air (7) jusqu'à l'espace de sortie d'air (11).

10. Moteur selon l'une quelconque des revendications précédentes, **caractérisé en ce que** l'élément de guidage de tourbillon (3) peut être déplacé par rapport à l'élément de déviation d'air (9) pour une modification globale et/ou locale d'une section transversale d'écoulement de l'espace de sortie d'air (11).

11. Moteur selon l'une quelconque des revendications précédentes, **caractérisé en ce que** l'élément de déviation d'air (9) et/ou l'élément de guidage de tourbillon (3) présente une chambre de flottabilité étanche aux fluides qui est remplie d'un gaz qui présente une densité inférieure à celle de l'air.

12. Moteur selon l'une quelconque des revendications précédentes, **caractérisé en ce qu'**au moins un espace utile de l'objet volant (1) est situé dans l'élément de déviation d'air (9) et/ou l'élément de guidage de tourbillon (3).

13. Procédé permettant de faire fonctionner un moteur (2) pour un objet volant (1), en particulier un moteur (2) selon l'une ou plusieurs des revendications précédentes, dans lequel le moteur (2) dispose d'un élément de guidage de tourbillon en forme d'anneau (3) qui présente, dans une vue en coupe, une ouverture d'entrée d'air (6) qui est située au centre par rapport à un axe central longitudinal (4) du moteur (2) et, à distance de l'ouverture d'entrée d'air (6), une ouverture de sortie d'air (7) qui est située au centre par rapport à l'axe central longitudinal (4), qui sont reliées entre elles de manière fluidique par l'intermédiaire d'un canal d'admission (5) qui est délimité par l'élément de guidage de tourbillon (3) et qui reçoit un dispositif de transport d'air (8), dans lequel l'ouverture de sortie d'air (7) est recouverte d'un élément de déviation d'air (9) qui est situé de manière géodésique au-dessus de l'élément de guidage de tourbillon (3) pendant le fonctionnement du moteur (2) tel que prévu, qui s'étend de manière radiale vers l'extérieur à partir de l'ouverture de sortie d'air (7), de manière à délimiter, avec l'élément de guidage de tourbillon (3), un espace de sortie d'air (11) qui est en communication fluidique avec l'ouverture de sortie d'air (7), dans lequel l'élément de guidage de tourbillon (3) se présente sous la forme d'un corps rotatif qui est formé par une rotation d'une courbe fermée autour d'un axe de rotation, présentant un tracé continu au moins sur son côté radialement extérieur, et **caractérisé en ce que** l'ouverture d'entrée d'air (6) débouche directement dans un environnement extérieur (19) du moteur (2), de telle sorte qu'il existe un espace d'air libre dans une extension imaginaire du canal d'admission (5) du côté de l'ouverture d'entrée d'air (6), et pendant un fonctionnement du moteur (2) tel que prévu, de l'air est transporté depuis le côté du moteur (2) opposé à l'élément de déviation d'air (9) à travers l'ouverture d'entrée d'air (6) directement dans le canal d'admission (5) depuis l'environnement extérieur.

14. Objet volant (1) comprenant au moins un moteur (2) selon une ou plusieurs des revendications 1 à 12.

15. Objet volant selon la revendication 14, **caractérisé par** une conception sous la forme d'un aéronef ou d'un véhicule automobile capable de voler.
